# EUROPEAN PATENT SPECIFICATION

(11) **EP 4 390 633 B1**
(45) Date of publication and mention of the grant of the patent: **04.02.2026**
(21) Application number: 22307014.5
(22) Date of filing: 22.12.2022
(51) Int. Cl.: G06F 3/0346, G06F 3/0354

(54) **ELECTRONIC DEVICE COMPRISING MAGNETOMETERS**
ELEKTRONISCHE VORRICHTUNG MIT MAGNETOMETERN
DISPOSITIF ÉLECTRONIQUE COMPRENANT DES MAGNÉTOMÈTRES

(43) Date of publication of application: 26.06.2024
(73) Proprietor: Advanced Magnetic Interaction, AMI, 38170 Seyssinet-Pariset (FR)
(72) Inventor: HAUTSON, Tristan, 38170 Seyssinet-Pariset (FR); ROSSET, Clément, 38170 Seyssinet-Pariset (FR); VALLEJO, Jean-Luc, 38170 Seyssinet-Pariset (FR)
(74) Representative: Peterreins Schley

(56) References cited:
- US-A1- 2014 168 174
- US-A1- 2022 397 967

## Description

### TECHNICAL FIELD

The present disclosure relates to an electronic device configured to obtain user interactions from a user-borne device, wherein the user-borne device comprises at least one magnetic object. The disclosure also relates to an associated system, method, computer program element, and computer readable medium.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device does not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

A user-operation of the user-borne device within a sensing volume created by the plurality of magnetometers may be represented on an output device (e.g., a screen) to a user. More specifically, a movement of the user-borne device within the sensing volume may be reproduced as a movement of a virtual object on the output device. In current applications, a visual reproduction on an output device of a location of a user-borne device within the sensing volume may be inaccurate and not reliable with respect to certain arrangements of the plurality of magnetometers and the output device. Accordingly, electronic devices comprising magnetometers can be further improved.

Document US20140168174A1 discloses a host electronic device, a stylus and a method for determining the location of a stylus with respect to a host electronic device. Document US20220397967A1 discloses a system for recording a track comprising: a utensil comprising a tip and equipped with a magnetic object; a device for locating the magnetic object configured to determine an estimated reference position on a writing surface; and a matrix-array touch sensor.

### SUMMARY

The invention is set out in the appended claims.

According to a first aspect, there is provided an electronic device configured to obtain user interactions from a user-borne device comprising at least one magnetic object.

The electronic device comprises an enclosure comprising a plurality of surfaces. The enclosure defines a mounting region of a plurality of components. A spatial extent of the enclosure is characterised by an orthogonal set of dimensions comprising a length, a width, and a height.

The electronic device comprises a first plurality of magnetometers relative to a reference coordinate system of the enclosure. The first plurality of magnetometers is encompassed by the enclosure. The first plurality of magnetometers is located within a first portion of the enclosure. The location of the first portion is within a first outer boundary plane coterminous with a first surface of the enclosure, and a first inner boundary plane parallel to the first outer boundary plane.

According to a second aspect, there is provided a system comprising an electronic device according to the first aspect, or its embodiments, and at least one user-borne device comprising at least one magnetic object and/or magnetic field generator. The electronic device is configured to obtain magnetic field measurements associated with the user-borne device, to determine a location of the user-borne device relative to the reference coordinate system, and to communicate the location of the user-borne device.

According to a third aspect, there is provided a computer-implemented method, comprising:
- obtaining, at an electronic device according to the first aspect or its embodiments, magnetic field measurements associated with at least one magnetic object and measured with a plurality of magnetometers comprised within the electronic device;
- determining a location of the user-borne device relative to the reference coordinate system relative to the electronic device based on the magnetic field measurements; and
- communicating the location of the user-borne device to a device driver instantiated in a user environment of the electronic device.

According to a fourth aspect, there is provided a computer program element comprising machine readable instructions which, when executed by a processor, cause the processor to perform method steps according to the third aspect, or its embodiments.

According to a fifth aspect, there is provided a computer readable medium comprising the fourth aspect.

An effect is that a specific magnetometer arrangement in an electronic device is provided enabling improved tracking of one or more magnets in a user-borne device.

Typical electronic devices, such as laptop computers, have a large number of ferromagnetic, ferrimagnetic elements, magnet or coil that affect the performance of magnetometer arrays when detecting the location of a magnet in a user-borne device. Furthermore, electronic devices such as laptops have demanding positioning constraints restricting where magnetometer arrays can be placed.

The present specification discusses a solution in which the sensing volume is created so as to cover sensing regions of an electronic device to extend the enclosure of the device, or sensing surface, of a magnetically based location sensing system. In specific arrangements, the sensing volume is created so as to cover the sides, front and/or rear part of the area in which a laptop keyboard is disposed. Magnetic sensors provided at the sides of the keyboard enable the sensing volume, and/or sensing surface to be extended along the sides of the laptop computer.

The present specification also discusses arrangements enabling the tilting of the printed circuit board or other mounting arrangement relative to an enclosure of an electronic device. Printed circuit board or other mounting arrangement comprising a plurality of magnetometers enhances the resolution of sensing, whilst enabling integration constraints inside the enclosure to be met.

Furthermore, a flexible printed circuit board can be provided comprising the magnetometer arrays. A flexible printed circuit board follows the curvature of an enclosure, enabling integration of the magnetometer array into a restricted mounting volume.

The application of such techniques improves the accuracy of detection in a sensing volume or sensing surface at the sides of an electronic device, such as a laptop, which is the area where accessories such as computer mice and computer styli are typically used. **In** general, the possible sensing volume or sensing area is bigger, owing to the improved signal-to-noise ratio of the magnetometer sensing system. Sensors located along the edge of an electronic device such as a laptop improve the signal-to-noise ratio when sensing in a sensing volume located above the user hand rest or keyboard area of the laptop, for example.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- Fig. 1: schematically illustrates an electronic device arranged with a user-borne device.
- Fig. 2: schematically illustrates a system for controlling a representation of a user borne device.
- Fig. 3: schematically illustrates the resolution of the position of a of a magnetic object relative to a magnetometer plane.
- Figs. 4A and 4B: schematically variants of positions for magnetometers when mounted in an electronic device.
- Fig. 5: schematically illustrates a plan view of a user interaction surface of an electronic device.
- Fig. 6: schematically illustrates a side cut through view of an electronic device.
- Fig. 7: schematically illustrates a plan view of a user interaction surface of an electronic device.
- Fig. 8: schematically illustrates a side cut through view of an electronic device.
- Fig. 9: schematically illustrates a plan view of a user interaction surface of an electronic device.
- Fig. 10: schematically illustrates a side cut through view of an electronic device.
- Fig. 11: schematically illustrates variants of magnetometer arrays.
- Fig. 12: schematically illustrates interaction volumes and surfaces around an electronic device
- Fig. 13: schematically illustrates a specific example of three pluralities of magnetometers.
- Fig. 14: schematically illustrates experimental results due to the layout illustrated in Fig. 13.
- Fig. 15: schematically illustrates experimental results due to the layout illustrated in Fig. 13.
- Fig. 16: schematically illustrates experimental results due to the layout illustrated in Fig. 13.
- Fig. 17: schematically illustrates a configuration of an electronic device.
- Fig. 18: schematically illustrates a computer-implemented method.

### DETAILED DESCRIPTION

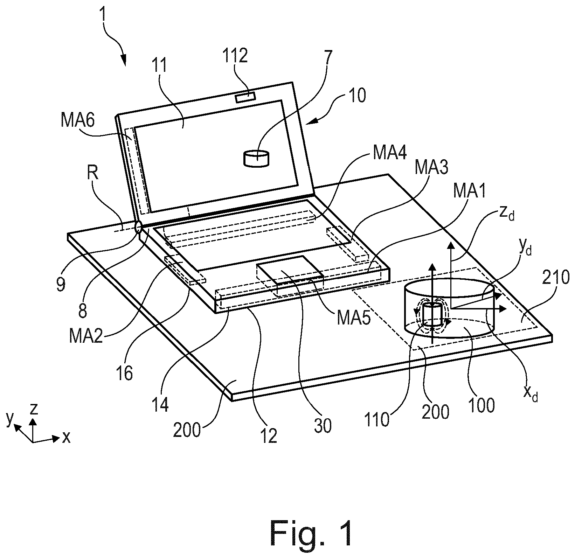

Fig. 1 schematically illustrates an electronic device arranged with a user-borne device according to a first aspect.

The electronic device 10 illustrated in Fig. 1 is a laptop computer comprised in a system 1 including a user-borne device 100. The user-borne device may, for example, be a computer mouse, a dial, a ring, a toy, a keyboard, a joystick or a stylus. The user-borne device 100 comprises at least one magnetic object 110. The user-borne device 100 is translatable and/or rotatable, for example, laterally on an interaction surface 210 provided by an interaction support 200.

Translations of the user-borne device 100 (and hence the magnetic moment of the at least one magnet comprised within the user-borne device 100) are detected by one or more pluralities of magnetometers MA1-MA6 comprised within the enclosure 12 of the electronic device 10.

The one or more pluralities of magnetometers MA1-MA6 output signals that are subjected to signal processing, enabling the electronic device 10 to resolve the location of the user-borne device 100 relative to the one or more pluralities of magnetometers MA1-MA6. Typically, the signal processing is performed by an embedded controller communicable coupled to the one or more pluralities of magnetometers MA1-MA6. The output of the signal processing, comprises, for example, a 2D location of the user-borne device 100 in the XY plane of the interaction surface 210, or a 3D location in a sensing volume defined around the electronic device 10. The output of the signal processing is provided to a device driver executed in a software environment of the electronic device 10. The device driver of electronic device 10 may be accessed by one or more applications hosted by the software environment of the electronic device 10. In this way, applications hosted by the software environment of the electronic device 10 obtain a proxy for the location of the user-borne device 100 in 2D or 3D coordinates. Applications hosted by the software environment electronic device 10 can, therefore, use the location of the user-borne device for a wide range of user input tasks. In the example of Fig. 1, the location of the user-borne device 100 is represented by a screen cursor 7 on the display 11 of the electronic device 10.

The electronic device 10 typically comprises a portion enclosed by a tablet-shaped cuboid envelope that rests on the interaction service 210. The electronic device 10 is illustrated is a laptop computer, which is also comprises a display 11 pivotable using a hinge 9 around the hinge axis R. The enclosure 12 thus comprises a first surface 14 typically faces towards a user, in use. The enclosure also comprises a second surface 16 on the left hand side of the user. The enclosure 12 also comprises a third surface 18 (not visible in the projection of Fig.1) on the right hand side of the user. The enclosure 12 also comprises a fourth surface 20 on the rear surface of the enclosure 12 which faces away from a user, in use. The first to fourth surfaces are covered by a surface comprising, for example, a touchpad 30. In use, the surface comprising the touchpad 30 functions to support the wrist of the user, for example.

A skilled person appreciates that the foregoing description of a laptop enclosure is one example, and the electronic device 10 can also be embodied in a tablet, a smart phone, a keyboard, a television, and/or an electronic device 10 having an arbitrary shape, such as a circular shape, square shape, triangular, pentagonal, or hexagonal shape, or any other shape.

In examples, the hinged display 11 portion of the electronic device 10 comprises a display surface magnet 112. In use, the location of the display surface magnet relative to the enclosure 12 can be resolved by one or more of the pluralities of magnetometers M1-M5 comprised in the enclosure 12.

In examples, the hinged display 11 portion of electronic device 10 comprises at least one plurality of magnetometers MA6, to provide greater fidelity to the detection of the location of the user-borne device 100.

In embodiments, the electronic device 10 includes a second plurality of magnetometers MA2 on the left-hand side of the enclosure 12. In embodiments, the electronic device 10 includes a third plurality of magnetometers MA3 on the right-hand side of the enclosure 12. The additional pluralities of magnetometers MA2 and MA3 extend along the enclosure 12 in the Y dimension, thus providing improved fidelity of the motion of the user-born device 100 towards the right and/or left-hand sides of the enclosure 12 on the interaction surface 210, or sensing volume proximate to the right or left sides of the enclosure 12. In embodiments, a fourth plurality of magnetometers MA4 provided along the rear of the enclosure 12 improve the fidelity of position detection of the user-borne device 100 proximate to the rare of the enclosure 12. For example, an electronic device 10 having the "2 in 1" format or a generic tablet PC may benefit from a fourth plurality of magnetometers MA4 enabling user interaction at the rear of the electronic device 10. A fifth plurality of magnetometers MA5 spatially correlated with the touchpad 30 may improve the resolution in a sensing volume immediately above or around the touchpad 30. A sixth plurality of magnetometers MA6 installed in the hinged portion of the enclosure 12 comprising the display 11 can further improve the fidelity of detection in the sensing volume in front of the display 11.

According to an embodiment, the electronic device 10, 800 is one of a laptop computer, a desktop computer, a tablet computer, a smartphone, a keyboard, a smartwatch, a television, an interactive whiteboard, a virtual reality headset, a wireless access point, and/or a display projector.

In examples, as a laptop computer, the enclosure 12 of the electronic device 10 comprises one or more other electronic modules. None of the following components are illustrated in Fig. 1 for the purposes of clarity. For example, the enclosure 12 illustrated in Fig. 1 can comprise a base cover configured to contact the interaction support 200, a battery configured to power other electronic circuit components of the electronic device. The enclosure may comprise a solid state drive or disc-based hard drive, a system board, one or more loudspeaker enclosures, a display assembly, a wireless modem and an associated antenna, a USB interface board, a heat sink and system fan, a palm-rest assembly, an I/O daughter board, and a heat sink shield. Furthermore, the enclosure comprises mechanical mounting elements such as pillars capable of holding the listed internal components of the electronic device 10 in place. Typically, an electronic device 10 has limited space for the addition of extra components.

According to an embodiment, the first surface of the enclosure 12 is closest to, and faces, a user of the electronic device 10, 800, in operation.

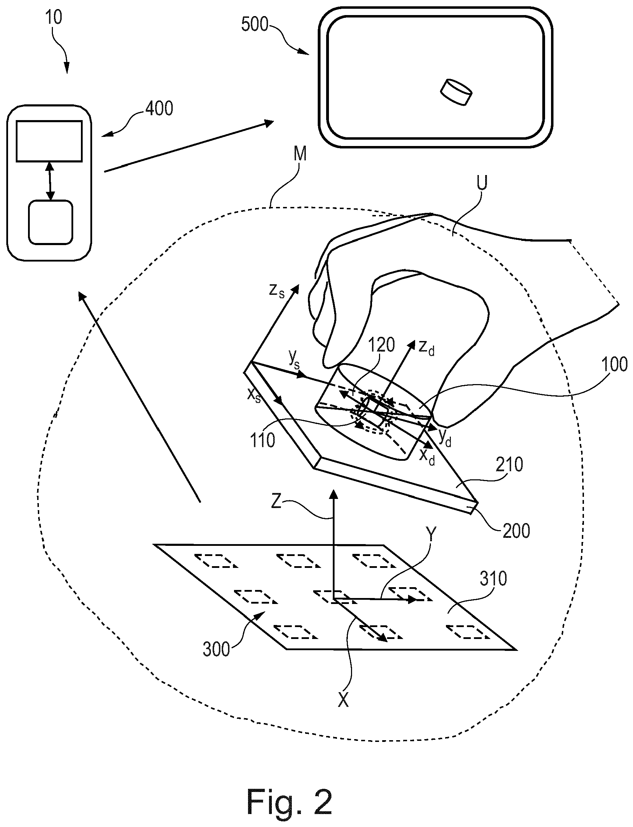

Fig. 2 schematically illustrates a system for controlling a representation of a user borne device.

Referring to Fig. 2, a user-borne device coordinate system comprises a first device axis xd, a second device axis yd orthogonal to the first device axis xd, and a vertical device axis zd orthogonal to xd and yd. In the examples shown, the user-borne device 100 may comprise a contact surface contacting an interaction surface 210. In other examples, the user-borne device may comprise a contact point (e.g., a stylus or other writing device comprising a writing tip which contacts an interaction surface 210 during a writing operation). The user-borne device 100 may be operated within a sensing volume M but not on the interaction surface 210. In this case, the user-borne device 100 may be used, e.g., as a pointer, which may not be operated directly on the interaction surface 210 (i.e., not in contact with and/or distanced to the interaction surface 210). In some embodiments, the device coordinate system may be defined within a geometric center of the user-borne device 100.

Referring to Fig. 2, an arrangement of the plurality of magnetometers with respect to an interaction surface 210 defined on an interaction support 200 is shown. In the embodiment shown in Fig. 2, the plurality of magnetometers 300 may be arranged in an array of rows and columns. However, it is also possible that the plurality of magnetometers may be arranged in a disordered, or randomized, manner within a plurality of magnetometers. A calibration procedure may be used to determine the exact locations of measurement axes, sensitivity, and offset of each magnetometer within the magnetometer body relative to the reference coordinate system XYZ. When the plurality of magnetometers 300 is rigidly installed in an enclosure 12 of an electronic device 10, the reference coordinate system of the plurality of magnetometers 300 is related to the reference coordinate system of the electronic device 10 by a rigid transformation. The plurality of magnetometers 300 are shown in Fig. 2 as being arranged in the magnetometer plane 310 (i.e., in the same plane relative to the vertical reference axis Z). However, as outlined above, one or more of the magnetometers may be distanced to the magnetometer plane 310, more specifically distanced in the direction of the vertical reference axis Z.

The plurality of magnetometers 300 may be electrically (e.g., via wires or a data bus) or wirelessly connected to the processing unit 400, the external processing unit and/or to the electronics device. In embodiments, the plurality of magnetometers 300 may be integrated in a wall, a furniture, a notebook, an electronics device, a screen, a keyboard and/or a mouse pad. In case the plurality of magnetometers 300 is arranged in a wall, the interaction surface 210 may be a screen or display placed in front of the plurality of magnetometers 300. In embodiments, the interaction surface 210 may be defined on the one or more output devices 500.

In embodiments, the electronic device 10 may comprise a processing unit 400 or may be connectable to an external processing unit. The processing unit 400 may be configured to execute a computer-implemented method capable of resolving the location (position and orientation) of the user-borne device 10 relative to the reference coordinate system XYZ. In embodiments, the processing unit 400 may be integrated in the electronics device. In embodiments, the output device 500 may be integrated in the electronics device. In embodiments, the electronics device 10 may be a tablet, a cell phone, a laptop, a computer, a virtual reality (VR) set or a television.

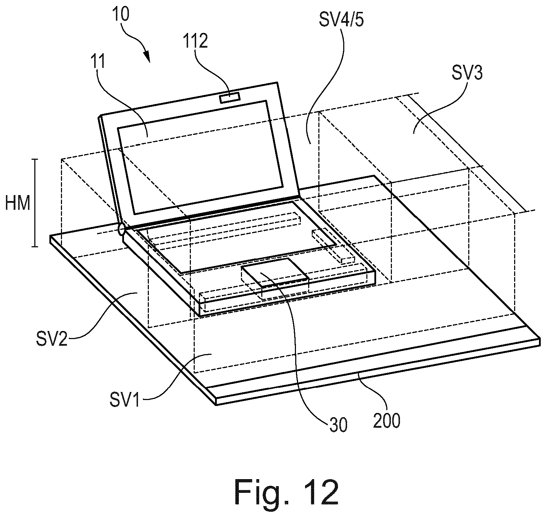

One of more of the pluralities of magnetometers MA1-MA6 of the electronic device 10 may be configured to enable the resolution of the 2D or 3D location (position and/or orientation), of a user-borne device 100 using signal processing. The spatial region within which the resolution can be performed with an acceptable signal to noise ratio is referred to as a sensing volume M1-M3 around the electronic device (as indicated, e.g., in Fig. 12). In an example, the sensing volume is defined by contours giving a common signal to noise ratio for location (integrating both position and orientation) detection. The plurality of magnetometers MA1-MA6 may be associated with a magnetometer plane 310. More specifically, the magnetometer plane 310 may be defined by a plane that may extend through a majority of the plurality of magnetometers 300. In some embodiments, the user-borne device 100 may be operable on an interaction surface 210, more specifically wherein the interaction surface 210 may be defined within, or as a boundary or, the sensing volume M.

When more than one plurality of magnetometers is present, a magnetometer plane is definable for each of the more than one plurality of magnetometers.

The term "at least one magnetic object" may refer to an object which may comprise components made of magnetic material, i.e., a material that has magnetic properties measurable by the plurality of magnetometers 300. The user-borne device 100 and/or the at least one magnetic object 210 may be mobile, i.e., freely movable within the reference coordinate system XYZ. In other words, during a user operation (i.e., an operation wherein the user-borne device 100 and/or the at least one magnetic object 110 is operated by a user), the location of the user-borne device 100 within the sensing volume M and/or relative to an interaction surface 210 may be manipulated by a user within the sensing volume M.

The at least one magnetic object 110 may be a permanent magnet. In embodiments, the at least one magnetic object 110 may be configured to generate a non-zero magnetic field. It may comprise a paramagnetic or diamagnetic material. In embodiments, the at least one magnetic object 110 may comprise a ferromagnetic material or a ferrimagnetic material.

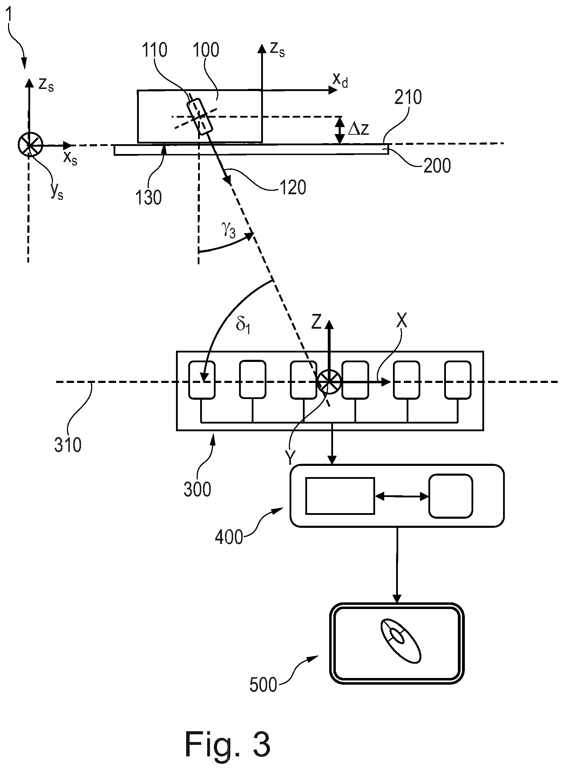

Fig. 3 schematically illustrates the resolution of the location of a magnetic object (for example, as comprised in a user-borne device 100) relative to a magnetometer plane.

Determining a user-borne device location may comprise determining a magnetic object location of the at least one magnetic object 110 which is indicative of the user-borne device location. Specifically, determining a user-borne device location may comprise determining a position vector indicative of a magnetic object position and/or determining a magnetic moment vector 120 indicative of a magnetic object orientation of the at least one magnetic object 110. Because the magnetic object 110 is coupled to the user-borne device 100, the location of the magnetic object 110 may indicate the location of the user-borne device 100.

The user-borne device location may be indicative of an absolute user-borne device location with respect to the magnetometer plane 310, specifically the reference coordinate system XYZ, and/or a relative user-borne device location with respect to the interaction surface 210. Determining a user-borne device location indicative of an absolute user-borne device location may comprise determining an absolute magnetic object location. The absolute magnetic object location may be indicative of an absolute magnetic object position and/or an absolute magnetic object orientation of the at least one magnetic object 110 relative to the reference coordinate system XYZ. Specifically, the absolute magnetic object location may be determined based on the obtained magnetic field measurements from a plurality of magnetometers MA1-MA6. Thereby, the absolute position and/or absolute orientation of the at least one magnetic object 110 in the reference coordinate system XYZ can be determined.

In embodiments, determining an absolute magnetic object location may comprise generating magnetic field measurement data based on the obtained magnetic field measurements. The magnetic field measurement data may be indicative of a magnetic field position, a magnetic field orientation and/or a magnetic field strength relative to the magnetic object 110 relative to the reference coordinate system XYZ. Determining an absolute magnetic object location may further comprise processing magnetic field measurement data to relate magnetic field measurement data to an absolute magnetic object location. For instance, a filter and/or an estimation algorithm may be used to evaluate the absolute magnetic object location related to the magnetic field measurement data.

The absolute magnetic object location may include a magnetic moment vector 120 and/or an absolute position vector associated with the at least one magnetic object 110. The magnetic moment vector 120 may be indicative of a magnetic object orientation and the magnetic strength of the magnetic object. The absolute position vector may be indicative of a magnetic object position with respect to the reference coordinate system XYZ. In embodiments, the absolute magnetic object orientation may be defined by a first set of magnetic object inclination angles δ1, δ2, δ3 measured between the magnetometer plane 310 and the magnetic moment vector 120. The first set of magnetic object orientation angles δ1, δ2, δ3 may be measured relative to the reference coordinate axes X, Y, Z, more specifically between the magnetic moment vector 120 and the respective axes X, Y, Z of the reference coordinate system XYZ.

For example, the first magnetic object orientation angle δ1 may be defined between the first reference axis X and the magnetic moment vector 120, more specifically in the XZ-plane. In embodiments, two angles with respect to the magnetometer plane 310 may be sufficient to define the absolute magnetic object orientation of the magnetic object 110. Specifically when a magnetic dipole model is used, two angles with respect to the magnetometer plane 310 may be sufficient to define the absolute magnetic object orientation of the magnetic object 110. More specifically, when the magnetic object 110 is symmetrical along the magnetization axis, i.e. rotationally symmetric magnetized, two angles with respect to the magnetometer plane 310 may be sufficient to define the absolute magnetic object orientation of the magnetic object 110. In some embodiments, absolute position vector may be defined by a first set of cartesian coordinates defined within the reference coordinate system XYZ.

The magnetic moment vector 120 and/or the absolute position vector may be determined based on an implementation of a measurement model and an estimation filter such as a Kalman filter, extended Kalman filter, or unscented Kalman filter. The measurement model associates each measurement of a magnetometer of the plurality of magnetometers 300 with a location of the at least one magnetic object 110 in the reference coordinate system XYZ. The model may be typically constructed from physical equations of electromagnetism, more specifically equations of magnetostatics. To establish this model, the at least one magnetic object 110 may be approximated by a magnetic dipole. Each magnetometer of the plurality of magnetometers 300 may be a vector magnetometer and may be configured to measure the magnetic field in one, two or three dimensions.

Referring to Fig. 3, determining a user-borne device location indicative of a relative user-borne device location may comprises determining a relative magnetic object location. The relative magnetic object location may be indicative of a relative magnetic object position and/or a relative magnetic object orientation. The relative magnetic object position may be a position of the at least one magnetic object 110 with respect to the interaction surface 210, more specifically to the interaction surface coordinate system xs, ys, zs.

The relative magnetic object orientation may be an orientation of the at least one magnetic object 110 with respect to the interaction surface 210, more specifically to the interaction surface coordinate system xs, ys, zs. The relative magnetic object location may include a magnetic moment vector 120 and/or a relative position vector Δxs, Δys, Δzs associated with the at least one magnetic object 110. The magnetic moment vector 120 may be indicative of a relative magnetic object orientation and/or wherein the relative position vector Δxs, Δys, Δzs is indicative of a relative magnetic object position with respect to the interaction surface coordinate system xs, ys, zs. In embodiments, the relative position vector may be understood as a vector from the origin of the surface coordinate system xs, ys, zs to the center of mass or dipole center of the magnetic object 110.

In embodiments, the relative magnetic object orientation may be defined by a second set of magnetic object inclination angles γ1, γ2, γ3 determined between the interaction surface 210 and the magnetic moment vector 120. In other words, the relative magnetic object orientation may be defined by a set of magnetic object inclination angles γ1, γ2, γ3 relative to the interaction surface coordinate axes xs, ys, zs.

Specifically, a first magnetic object inclination angle γ1 (not shown in Fig. 3) may be determined between the first interaction surface axis xs and the magnetic moment vector 120. A second magnetic object inclination angle γ2 (not shown in Fig. 3) may be determined between second interaction surface axis ys and the magnetic moment vector 120. A vertical magnetic object inclination angle γ3 may be determined between vertical interaction surface axis zs and the magnetic moment vector 120. For example, the vertical magnetic object inclination angle γ3 may be defined between the vertical interaction surface axis zs and the magnetic moment vector 120. Specifically, the vertical magnetic object inclination angle γ3 may be defined between the magnetic moment vector 120 and the vertical interaction surface axis zs or an axis parallel thereto such that the vertical magnetic object inclination angle γ3 can only range between 0° and 90°. In embodiments, two angles with respect to the magnetometer plane 310 may be sufficient to define the relative magnetic object orientation of the magnetic object 110.

The arrangement of one or more pluralities of magnetometers in the electronic device 10 is, thus, associated with the range of magnetic object inclination angles, and the distance from the electronic device at which such angles can be reliably determined, as two examples. In other words, the disposition of the one or more pluralities of magnetometers MA1-MA6 in the electronic device 10 determines the sensing volume M within which it is possible to reliably use the user-borne device. Therefore, beneficial arrangements of one or more pluralities of magnetometers MA1-MA6 in the electronic device 10 will now be discussed.

According to the first aspect, there is provided an electronic device 10, 800 configured to obtain user interactions from a user-borne device 100 comprising at least one magnetic object 110, wherein the electronic device 10, 800 comprises:
- an enclosure 12 comprising a plurality of surfaces 14, 16, 18, 20, wherein the enclosure 12 defines a mounting region of a plurality of components, wherein a spatial extent of the enclosure 12 is characterised by an orthogonal set of dimensions comprising a length L, a width W, and a height H; and
- a first plurality of magnetometers MA1 relative to a reference coordinate system of the enclosure 12, wherein the first plurality of magnetometers MA1 is encompassed by the enclosure 12;
wherein the first plurality of magnetometers MA1 is located within a first portion 14a of the enclosure 12, wherein the location of the first portion 14a is within a first outer boundary plane coterminous with a first surface 14 of the enclosure 12, and a first inner boundary plane 14b parallel to the first outer boundary plane.

According to an example, the enclosure 12 is fabricated from materials that enable magnetometers comprised within the enclosure 12 to detect variations in magnetic field outside the enclosure 12. For example, the enclosure 12 may comprise plastics, wood, or aluminium. In an example, the surfaces of the enclosure 12 do not comprise magnetic material such as ferromagnetic and/or ferrimagnetic materials.

Fig. 1 schematically illustrates an electronic device 10 according to the first aspect.

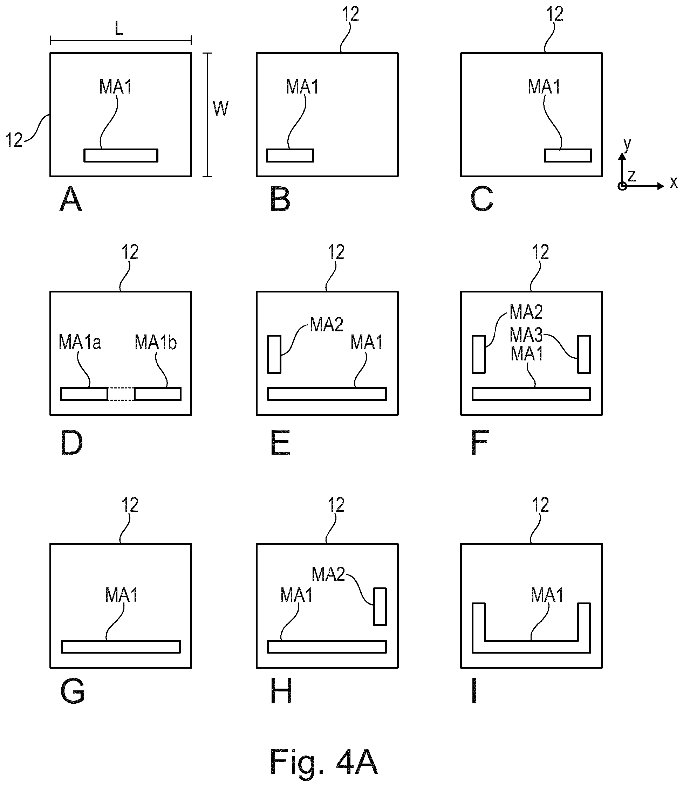

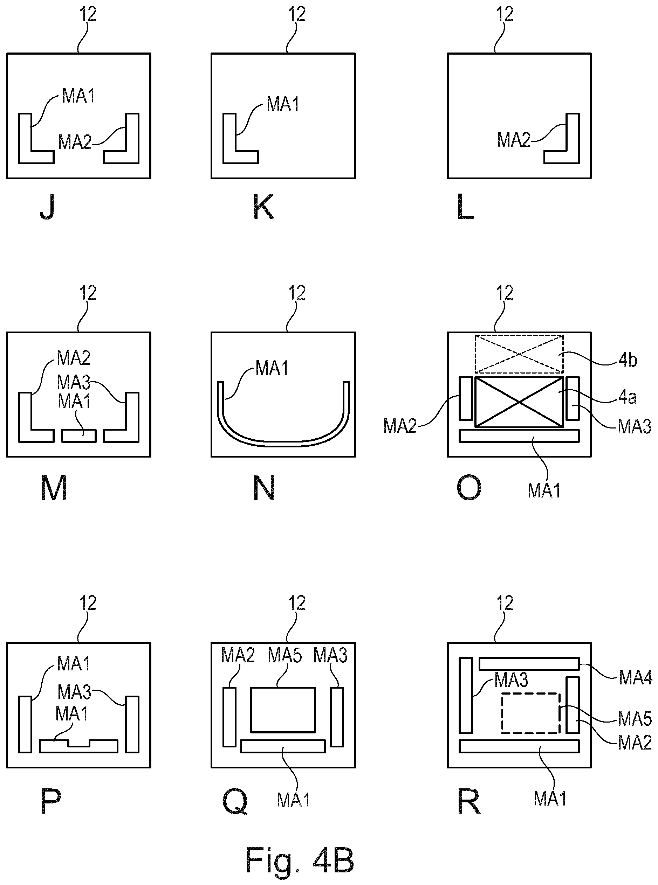

Figs. 4A and 4B schematically illustrate variants of positions for magnetometers when mounted in an electronic device. The representations of 4A and 4B are plan views of the arrangement of regions comprising pluralities of magnetometers inside the enclosure 12 illustrated in Fig. 1.

According to arrangement embodiment A, one plurality of magnetometers MA1 is provided proximate to a front wall of the enclosure 12.

According to arrangement embodiment B, one plurality of magnetometers MA1 is provided proximate to a left front corner of the enclosure 12.

According to arrangement embodiment C, one plurality of magnetometers MA1 is arranged proximate to a right front corner of the enclosure 12.

According to arrangement embodiment D, one plurality of magnetometers MA1 is provided substantially proximate to the front wall facing the user of the enclosure 12. In this case, the one plurality of magnetometers MA1 is divided into sub regions MA1a and MA1b.

According to arrangement embodiment E, the enclosure comprises a first plurality of magnetometers MA1 disposed proximate to the front wall of the enclosure 12, and a second plurality of magnetometers MA2 disposed proximate to a left hand side wall of the enclosure 12.

According to arrangement embodiment F, the enclosure comprises a first plurality of magnetometers MA1 disposed proximate to the front wall of the enclosure 12, a second plurality of magnetometers MA2 disposed proximate to a left hand side wall of the enclosure 12, and a third plurality of magnetometers disposed proximate to a right hand side wall of the enclosure 12.

Arrangement embodiment G is similar to option A, although emphasises that the first plurality of magnetometers MA1 is provided proximate to the front wall of the enclosure 12 but the ends of the region comprising the first plurality of magnetometers MA1 extend until proximate to the left hand side wall and the right hand side wall of the enclosure 12.

Arrangement embodiment H provides the first plurality of magnetometers MA1 proximate to the front wall of the enclosure 12 combined with a second plurality of magnetometers MA2 proximate to the right side wall of the enclosure 12.

Arrangement embodiment I illustrates that the first plurality of magnetometers MA1 can be considered to be a continuous U-shaped feature in the XY plane of the enclosure 12. In other words, portions of the first plurality of magnetometers MA1 are proximate to the left hand side wall, front wall, and the right hand side wall of the enclosure 12.

Arrangement embodiment J illustrates a first and second plurality of magnetometers MA1, MA2. The first plurality of magnetometers MA1 is proximate to the left hand side wall and front wall of the enclosure 12. The second plurality of magnetometers MA2 is proximate to the right hand side wall and front wall of the enclosure 12.

In an example of embodiment J, one or more of the first and second plurality of magnetometers MA1 and MA2 may be mounted on front-corner loudspeaker enclosures of an electronic device 10, such as an internal laptop sound system.

Arrangement embodiments K and L illustrate that a plurality of magnetometers can be provided in isolation at either the left or the right corners of the enclosure 12. Arrangement embodiment M is similar to embodiment I because the three pluralities of magnetometers MA1, MA2, and MA3 together form a U-shaped unit proximate to the left, front, and right hand sides of enclosure 12. Arrangement embodiment N illustrates a first plurality of magnetometers MA1 disposed on a substantially curved mounting substrate that may, for example, be a flexible printed circuit board. In this example, the flexible printed circuit board is conformably positioned relative to the surface walls of the enclosure 12.

Arrangement embodiment O illustrates an embodiment to be discussed subsequently in which first, second, and third pluralities of magnetometers MA1-MA3 define a region 4a of the enclosure 12 comprising no, or substantially no, magnetic material. Optionally, region 4b of the enclosure 12 may comprise magnetic material. An advantage of such an arrangement is that omitting magnetic materials from the region 4a improves the fidelity of magnetic surface or volume positioning when a user-borne device 100 is held proximate to the plurality of magnetometers MA1-3.

Arrangement embodiment P illustrates a variant of option F in which the first plurality of magnetometers MA1 comprises a notch (in other words, a longitudinal section of the first plurality of magnetometers MA1 is constricted in the XY plane) to accommodate an antenna portion of an electronic device 10.

Arrangement embodiment Q illustrates a variant of option F further comprising a plurality of magnetometers MA5 located proximate to touchpad 30 would be positioned in the enclosure 12 of the electronic device.

Arrangement embodiment R illustrates an electronic device 10 comprising an enclosure 12 with a rear plurality of magnetometers MA4.

All arrangement embodiments discussed above can be combined with other embodiments disclosed throughout this specification.

According to an embodiment, the first plurality of magnetometers MA1 is proximate to the first surface 14 of the enclosure 12.

For example, a printed circuit board or other carrier comprising magnetometers belonging to the first plurality of magnetometers MA1 is in physical contact with the first surface 14 of the enclosure 12. For example, a printed circuit board or other carrier comprising magnetometers belonging to the first plurality of magnetometers MA1 is bonded to, or integrally formed with the first surface 14 of the enclosure 12.

For example, a printed circuit board or other carrier comprising magnetometers belonging to the first plurality of magnetometers MA1 abuts, but is not joined to, the first surface 14 of the enclosure 12.

For example, a printed circuit board or other carrier comprising magnetometers belonging to the first plurality of magnetometers MA1 separated from the first surface 14 of the enclosure 12 by a distance in the Y direction of greater than 0.1mm, 0.2mm, 0.3mm, 0.4mm, 0.5m, 0.6mm, 0.7mm, 0.8mm, 0.9mm, 1.0mm, 1.1mm, 1.2mm, 1.3mm, 1.4mm, 1.5mm, 1.6mm, 1.7mm, 1.8mm, 1.9mm, 2.0mm, 3.0mm, 4.0mm, or 5.0mm. where this specification refers to another plurality of magnetometers MA2-MA6, the term "proximate to" refers to a similar separation distance between the another plurality of magnetometers MA2-MA6 and other surfaces of the enclosure 12.

According to an embodiment, the length L of the enclosure 12, preferably defined as a major dimension of the first or fourth surfaces, is in the range 50mm to 400mm.

According to an embodiment, the width W of the enclosure 12, preferably defined as a major dimension of the second or third surfaces, is in the range 50mm to 400mm.

According to an embodiment, the height H of the enclosure 12 is in the range 5mm to 50mm.

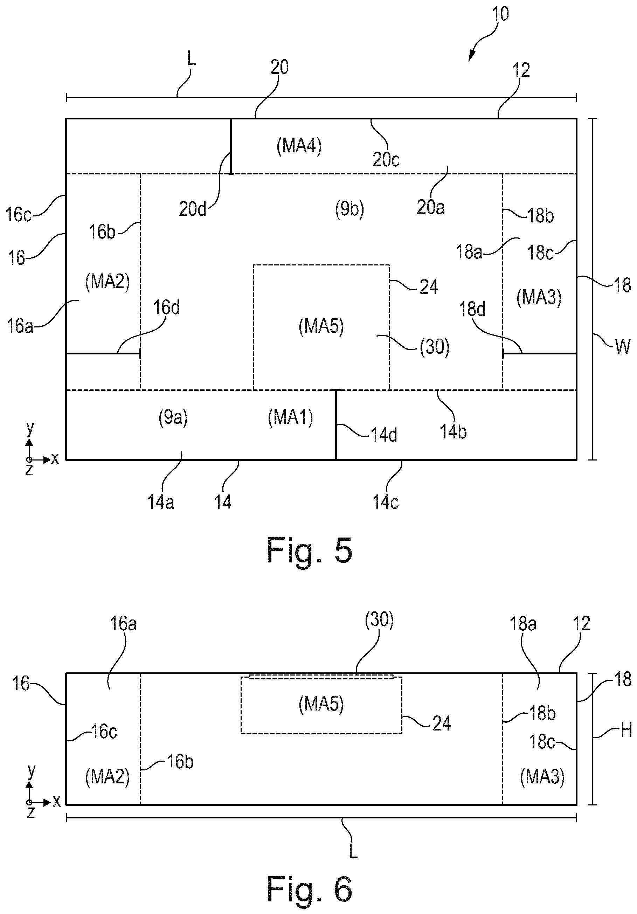

Fig. 5 schematically illustrates a plan view of a user interaction surface of an electronic device.

According to an embodiment, magnetometers physically located in the first portion 14a exclusively comprise magnetometers operably coupled to the first plurality of magnetometers MA1. Magnetometers not associated with the first plurality of magnetometers MA1 are not physically located within the first portion 14a.

According to an embodiment, magnetometers physically located in the second portion 16a exclusively comprise magnetometers operably coupled to the second plurality of magnetometers MA2. Magnetometers not associated with the second plurality of magnetometers MA2 are not physically located within the second portion 16a.

According to an embodiment, magnetometers physically located in the third portion 18a exclusively comprise magnetometers operably coupled to the third plurality of magnetometers MA3. Magnetometers not associated with the third plurality of magnetometers MA3 are not physically located within the third portion 18a.

According to an embodiment, magnetometers physically located in the fourth portion 20a exclusively comprise magnetometers operably coupled to the fourth plurality of magnetometers MA4. Magnetometers not associated with the fourth plurality of magnetometers MA4 are not physically located within the fourth portion 20a.

According to an embodiment, magnetometers physically located in the fifth portion 22a exclusively comprise magnetometers operably coupled to the fifth plurality of magnetometers MA5. Magnetometers not associated with the fifth plurality of magnetometers MA5 are not physically located within the fifth portion 22a.

Fig. 5 omits depiction of all other elements of an electronic device 10, such as printed circuit boards and batteries, to enable the boundaries of the mounting regions of the pluralities of magnetometers to be more clearly visible.

Fig. 6 schematically illustrates a side cut through view of the electronic device depicted in Fig. 5.

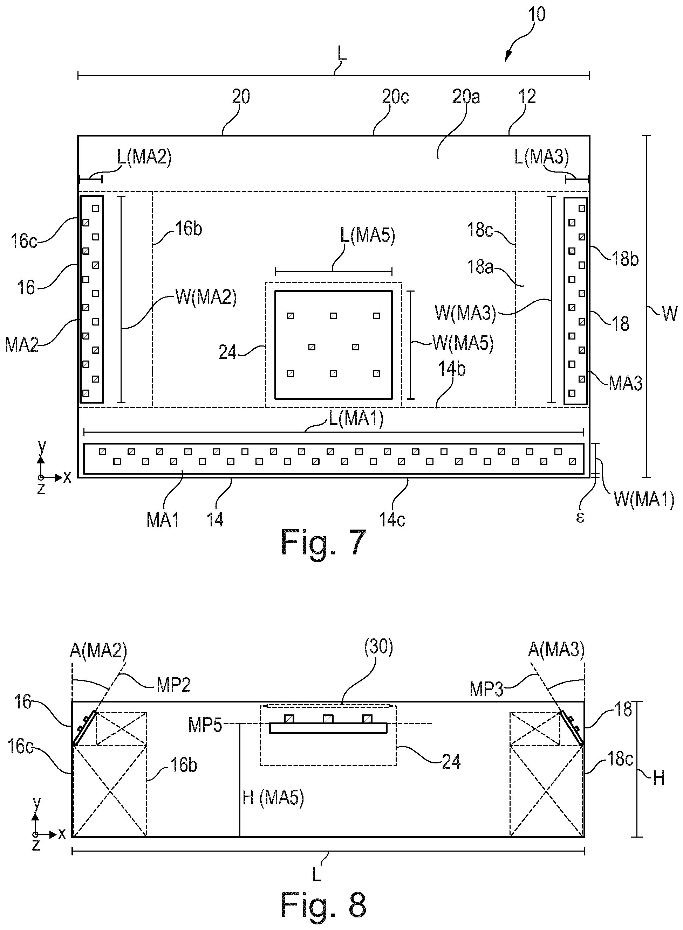

Fig. 7 schematically illustrates a plan view of a user interaction surface of an electronic device.

Fig. 8 schematically illustrates a side cut through view of an electronic device.

Unlike Figs. 5 and 6, Figs. 7 and 8 depict the internal mounting arrangement in an enclosure 12 of the printed circuit boards that comprise the first to fifth pluralities of magnetometers MA1-MA5.

The printed circuit board (or electronics assembly) comprising the first plurality of magnetometers MA1 has a length L(MA1) and a width W(MA1). The fact that the printed circuit board comprising the first plurality of magnetometers MA1 is mounted proximate to the first wall 14 of the enclosure 12 is illustrated using the depicted distance epsilon (ε).

The printed circuit board (or electronics assembly) comprising the second plurality of magnetometers MA1 has a length L(MA2) and a width W(MA2).

The printed circuit board (or electronics assembly) comprising the third plurality of magnetometers MA3 has a length L(MA3) and a width W(MA3).

The printed circuit board (or electronics assembly) comprising the fourth plurality of magnetometers MA4 has a length L(MA4) and a width W(MA4).

The printed circuit board (or electronics assembly) comprising the fifth plurality of magnetometers MA5 has a length L(MA5) and a width W(MA5).

The dimensions of each of the second and third pluralities of magnetometers can be significantly different, and do not need to be the same as illustrated in Fig. 7.

According to an embodiment, a line orthogonal to, and separating, the first surface 14 of the enclosure 12 and the first inner boundary plane 14b defines a first portion separation distance 14d, and a ratio between the first portion separation 14d distance and the width W of the enclosure 12 is less than one of: 0.25, 0.2, 0.15, 0.1, or 0.05.

According to an embodiment, the first portion separation distance 14d is less than one of: 1mm, 2mm, 3mm, 4mm, 5mm, 10mm, 15mm, or 20mm.

According to an embodiment, the first portion 14a of the enclosure 12 comprising the first plurality of magnetometers MA1 has a cuboidal shape defined by a first portion length, a first portion width, and a first portion height.

According to an embodiment, the first surface of the enclosure 12 is closest to, and faces, a user of the electronic device 10, in operation.

According to an embodiment, the first portion 14a of the enclosure 12 has a length greater than one of 10%, 20%, 30%, 40%, 50%, 60%, 70%, 80%, 82.5%, 85%, 87.5%, or 90%, 92.5%, 95%, or 97.5% of the total length L of the enclosure 12.

According to an embodiment, the first portion 14a is centred about a line of symmetry of the enclosure 12, or the first portion 14a abuts a second surface 16 or a third surface 18 that are, respectively, perpendicular to the first surface 14 of the enclosure 12.

According to an embodiment the first portion 14a extends along substantially the entire length L of the enclosure 12.

According to an embodiment, the first plurality of magnetometers MA1 comprises a network of N magnetometers arranged in a matrix.

According to an embodiment, the magnetometers of the first plurality of magnetometers MA1 are mounted in the first magnetometer plane. The angle A(MA1) enclosed by the first magnetometer plane and the first surface 14 of the enclosure 12 is at least 5, 7.5, 10, 12.5, 15, 17.5, 20, 22.5, 25, 27.5, 30, 32.5, 35, 37.5, 40, 42.5, 45, 47.5, 50, 52.5, 55, 57.5, 60, 62.5, 65, 67.5, 70, 72.5, 75, 77.5, 80, 82.5, 85, 87.5, or 90 degrees.

According to the invention the electronic device 10, 800 further comprises:
- a second plurality of magnetometers MA2 relative to the reference coordinate system of the enclosure 12, wherein the second plurality of magnetometers MA2 is encompassed by the enclosure 12. The second plurality of magnetometers MA2 is located within a second portion 16a of the enclosure 12. The location of the second portion 16a is within a second outer boundary plane 16c coterminous with the second surface of the enclosure 12, and a second inner boundary plane 16b parallel to the second outer boundary plane 16c.

According to an embodiment, a line orthogonal to, and separating, the second surface of the enclosure 12 and the second inner boundary plane 16b defines a second portion separation distance 16d, and a ratio between the second portion separation distance 16d and the length L of the enclosure 12 is less than one of: 0.25, 0.2, 0.15, 0.1, or 0.05.

According to an embodiment, the second portion separation distance 16d is less than one of: 1mm, 2mm, 3mm, 4mm, 5mm, 10mm, 15mm, or 20mm.

According to an embodiment, the second plurality of magnetometers MA2 is proximate to the second surface 16 of the enclosure 12.

According to an embodiment, the magnetometers of the second plurality of magnetometers MA2 are mounted in a second magnetometer plane, wherein an angle A(MA2) enclosed by the second magnetometer plane and the second surface 16 of the enclosure 12 is at least 5, 7.5, 10, 12.5, 15, 17.5, 20, 22.5, 25, 27.5, 30, 32.5, 35, 37.5, 40, 42.5, 45, 47.5, 50, 52.5, 55, 57.5, 60, 62.5, 65, 67.5, 70, 72.5, 75, 77.5, 80, 82.5, 85, 87.5, or 90 degrees.

According to an embodiment, the second plurality of magnetometers MA2 comprises a network of N magnetometers arranged in a matrix, more specifically wherein N is greater than 5, 16, 32, 64, 128, or 256.

According to an embodiment, the electronic device 10, 800 further comprises a third plurality of magnetometers MA3 relative to the reference coordinate system of the enclosure 12, wherein the third plurality of magnetometers MA3 is encompassed by the enclosure 12. The third plurality of magnetometers MA3 is located within a third portion 18a of the enclosure 12, and the location of the third portion 18a is within a third outer boundary plane 18c coterminous with a third surface 18 of the enclosure 12, and a third inner boundary plane 18b parallel to the third outer boundary plane 18c.

According to an embodiment, a third portion separation distance 18d is defined in a direction orthogonal to, and in-between, the third surface 18 of the enclosure 12 and the third inner boundary plane 18b, and a ratio between the third portion separation distance 18d and the length L of the enclosure 12 is less than one of: 0.25, 0.2, 0.15, 0.1, or 0.05.

According to an embodiment, the third portion separation distance 18d is less than one of: 1mm, 2mm, 3mm, 4mm, 5mm, 10mm, 15mm, or 20mm.

According to an embodiment, the third plurality of magnetometers MA3 is proximate to the third surface 18 of the enclosure 12.

According to an embodiment, the magnetometers of the third plurality of magnetometers MA3 are mounted in a third magnetometer plane, wherein an angle A(MA3) enclosed by the third magnetometer plane MA3 and the third surface 18 of the enclosure 12 is at least 5, 7.5, 10, 12.5, 15, 17.5, 20, 22.5, 25, 27.5, 30, 32.5, 35, 37.5, 40, 42.5, 45, 47.5, 50, 52.5, 55, 57.5, 60, 62.5, 65, 67.5, 70, 72.5, 75, 77.5, 80, 82.5, 85, 87.5, or 90 degrees.

According to an embodiment, the first plurality of magnetometers MA1 and the second plurality of magnetometers MA2 are mounted on a unitary member or a unitary printed circuit board proximate to a corner of the second surface 16 and the first surface 14 of the enclosure 12.

According to an embodiment, the first plurality of magnetometers MA1 and the third plurality of magnetometers MA3 are mounted on a unitary member or a unitary printed circuit board proximate to a corner of the third surface 18 and the first surface 14 of the enclosure 12.

According to an embodiment, the electronic device 10, 800 further comprises a fourth plurality of magnetometers MA4 relative to the reference coordinate system of the enclosure 12. The fourth plurality of magnetometers MA4 is encompassed by the enclosure 12. The fourth plurality of magnetometers MA4 is located within a fourth portion 20a of the enclosure 12. The location of the fourth portion 20a is within a fourth outer boundary plane 20c coterminous with a fourth surface 20 of the enclosure 12, and a fourth inner boundary plane 20b parallel to the fourth outer boundary plane.

According to an embodiment, the fourth surface 20 of the enclosure 12 is furthest from, and faces away from, a user of the electronic device 10, 800, in operation.

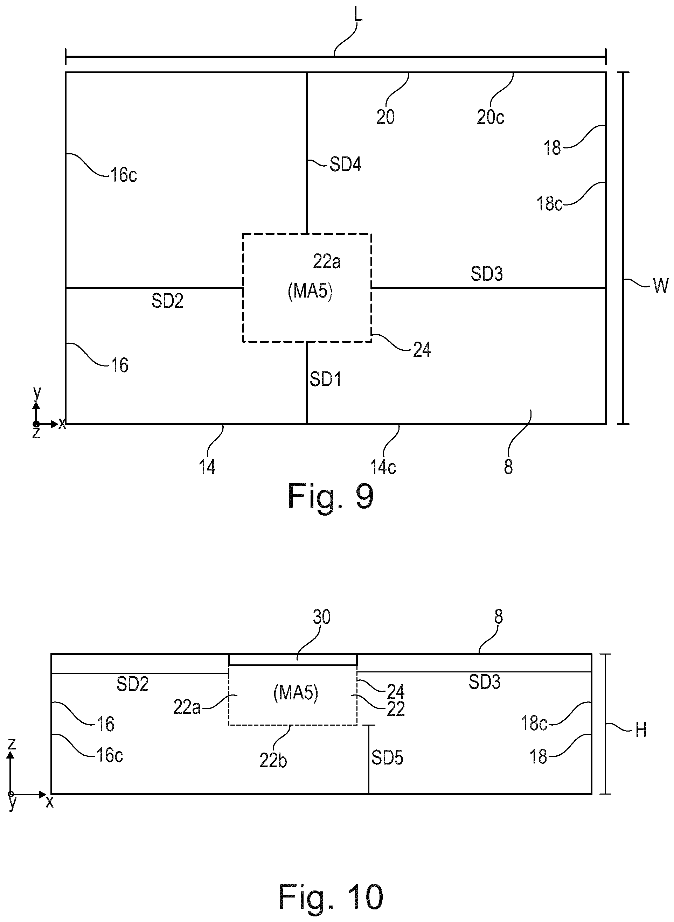

Fig. 9 schematically illustrates a plan view of a user interaction surface 8 of an electronic device.

Fig. 10 schematically illustrates a side cut through view of an electronic device.

According to an embodiment, the enclosure 12 comprises at least a user interaction portion 8 in a user interaction plane at a reference height above a base portion of the enclosure 12). The electronic device 10, 800 further comprises a fifth plurality of magnetometers (MA5) encompassed by the enclosure 12. The fifth plurality of magnetometers MA5 are arranged in a fifth portion 22a of the enclosure 12, wherein an upper boundary of the fifth portion 22a is provided by the user interaction portion 8, and a lateral boundary of the fifth portion 22a is separated from one or more surfaces of the enclosure 12 by a corresponding plurality of distances SD1-SD4.

According to an embodiment, the electronic device 10, 800 further comprises a touchpad 30. A portion of the touchpad 31 is disposed parallel, or substantially coplanar, to the user interaction portion 8.

According to an embodiment, the lateral boundary of the fifth portion 22a is parallel, or substantially aligned with a lateral extent of the touchpad 30.

According to an embodiment, a lower boundary 22b of the fifth portion 22a is the base portion of the enclosure 12, or a lateral plane that is a predetermined distance below the user interaction portion in the height H direction.

According to an embodiment, the fifth portion 22a has the form of a cuboid.

According to an embodiment, the fifth portion 22a is positioned such that a centroid of the fifth portion 22a lies on a line segment perpendicularly bisecting the user interaction portion in the width and/or the length direction of the enclosure 12.

According to an embodiment, a first distance SD1 measured along a line on a plane of the user interaction portion 8 that is between, and perpendicular to, the first surface 14 of the enclosure 12 and the lateral boundary of the fifth portion 22a is greater than a distance characterized by the width W of the enclosure 12 multiplied by a factor of one of 0.33, 0.25, 0.20, 0.15, 0.10, or 0.05.

According to an embodiment, a second distance SD2 measured along a line on a plane of the user interaction portion 8 that is between, and perpendicular to, the second surface 16 of the enclosure 12 and the lateral boundary of the fifth portion 22a is greater than a distance characterized by the width W of the enclosure 12 multiplied by a factor of one of 0.33, 0.25, 0.20, 0.15, 0.10, or 0.05.

According to an embodiment, a third distance SD3 measured along a line on a plane of the user interaction portion 8 that is between, and perpendicular to, a third surface 18 of the enclosure 12 and the lateral boundary of the fifth portion 22a is greater than a distance characterized by the width of the enclosure 12 multiplied by a factor of one of 0.33, 0.25, 0.20, 0.15, 0.10, or 0.05.

According to an embodiment, a fourth distance SD4 measured along a line on a plane of the user interaction portion 8 that is between, and perpendicular to, a fourth surface 20 of the enclosure 12 and the lateral boundary of the fifth portion 22a is greater than a distance characterized by the length of the enclosure 12 multiplied by a factor of one of 0.75, 0.70, 0.65, 0.60, 0.55, 0.50, 0.45, 0.40, 0.35, 0.30, 0.25, 0.20, 0.15, 0.10, or 0.05.

According to an embodiment, the fifth plurality of magnetometers MA5 is mounted along a line defined by at least a portion of the lateral boundary 24 of the fifth portion 22a.

According to an embodiment, the one or more of the first to fifth pluralities of magnetometers is mounted within its respective magnetometer mounting region on corresponding 2D planar member.

According to an embodiment, a first subset of the fifth plurality of magnetometers MA5 is mounted at a different height H of the enclosure 12 in the fifth portion 22a relative to a second subset of the fifth plurality of magnetometers MA5.

According to an embodiment, the magnetometers comprised in the first to fifth pluralities of magnetometers are not mounted in or around a laptop display 11.

According to an embodiment, N is greater than or equal 5, 16, 32, 64, 128, or 256.

According to an embodiment, the magnetometers of the first plurality of magnetometers MA1 are mounted on a first printed circuit board.

According to an embodiment, the magnetometers comprised in the matrix of the first plurality of magnetometers MA1 are arranged in at least two rows separated by a separation distance D extending along a length direction L(MA1) of the first plurality of magnetometers MA1.

According to an embodiment the first printed circuit board has a maximum dimension in the length direction L(MA1) of 310mm and a maximum dimension in the width direction W(MA1) of 220mm.

According to an embodiment, the electronic device 10, 800 further comprises:
- a processor 804 communicably coupled to at least the first plurality of magnetometers; and
- a communication interface 806 communicably coupled to the processor 804.

The processor 804 is configured to obtain, via the communications interface, a plurality of measurements associated with at least one magnetic object measured with at least the first plurality of magnetometers MA1.

The processor 804 is configured to perform signal processing on the plurality of signals to thus generate a coordinate characterising the location and/or an orientation of at least one user accessory comprising the at least one magnet, relative to at least the first magnetometer plane.

The processor 804 is configured to transmit the location characterising the position and/or an orientation of at least one user-borne device via the communication interface 806.

According to an embodiment, the first plurality of magnetometers MA1, the second plurality of magnetometers MA2, and the third plurality of magnetometers MA3 are mounted on a unitary member or a unitary printed circuit board.

According to an embodiment, the first plurality of magnetometers MA1, and/or second plurality of magnetometers MA2, and/or third plurality of magnetometers MA3, and/or fourth plurality of magnetometers MA4, and/or fifth plurality of magnetometers MA5 are mounted on a flexible printed circuit board.

According to an embodiment the inside of the enclosure 12 is divided into a first volume 9a comprising at least the first plurality of magnetometers MA1, and a second volume 9b that does not comprise any magnetometers. According to an embodiment the first volume 9a does not comprise a substantial amount of magnetic material.

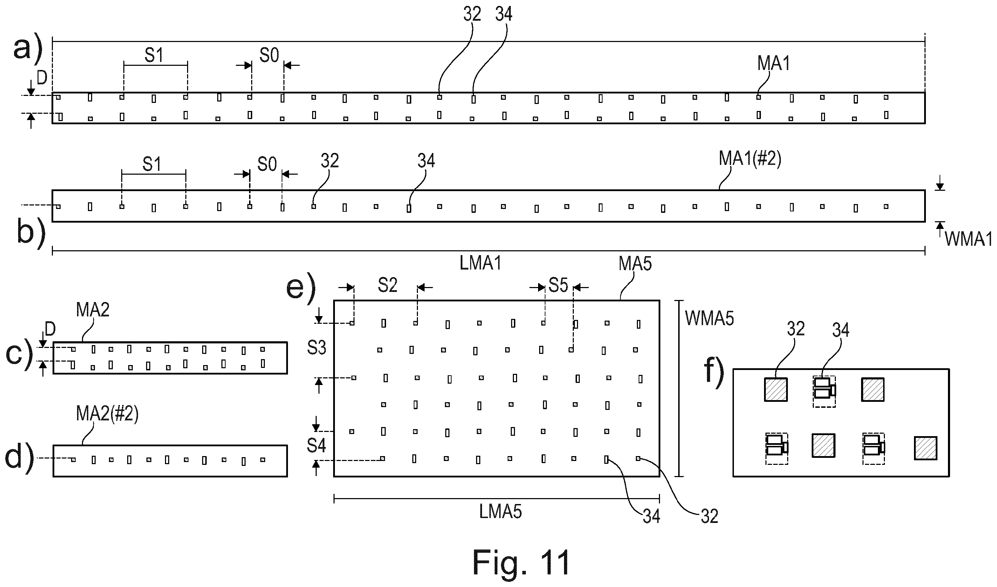

Fig. 11 schematically illustrates variants of pluralities of magnetometers. Alternatively, these may be named groups of magnetometers or magnetometer arrays.

Fig. 11a) illustrates a linear plurality of magnetometers MA1 having an aspect ratio suitable for use proximate to, or in contact with, the front surface 14 of an electronic device 10 such as a laptop. According to an example, the aspect ratio (width:length) of the printed circuit board supporting the plurality of magnetometers is 1:30, 1:25, 1:20, 1:15, or 1:10. The example of Fig. 11a) illustrates a linear plurality magnetometers MA1 comprising two rows of magnetometers separated by pitch distance D. The magnetometers 32 of each row are separated by a distance S1. In an example, the magnetometers of the first row are offset relative to the magnetometers of the second row by an offset distance S0. According to an embodiment, passive components 34 required for the operation of each magnetometer 32 are provided in a gap defined by the offset distance S0.

According to a specific example, a front printed circuit board intended to be mounted proximate to a first surface 14 may have a width dimension of 10 mm and a length dimension of 280 mm. The front printed circuit board may comprise 27 magnetometers. The front printed circuit board (and its associated magnetometer plane) are provided with an angle of 25 degrees relative to a perpendicular vector to the surface upon which the electronic device 10 stands.

Fig. 11b) illustrates a variant of Fig. 11a) in which a linear plurality of magnetometers MA1#2 is provided in a single row.

Fig. 11c) illustrates a plurality of magnetometers arranged in a set of two offset rows mounted on a printed circuit board suitable for use proximate to the second 16 or third 18 surfaces of an enclosure 12 of an electronic device 10. In particular, the printed circuit board MA2 may have an aspect ratio (width:length) of 1:10, 1:7, 1:5, or 1:3.

According to a specific example, the second and/or third party of magnetometers are provided on a printed circuit board having a length dimension of 10 mm, and width dimension of 75 mm. The printed circuit board comprises 11 magnetometers and is mounted at an angle of 45 degrees relative to a perpendicular vector relative to the surface on which the electronic device 10 stands.

Fig. 11d) illustrates a plurality of magnetometers arranged on a printed circuit board in a single line.

Fig. 11e) illustrates a two-dimensional matrix of magnetometers suitable for use, for example, underneath a touchpad 30 in a fifth plurality of magnetometers as discussed previously in this specification. The printed circuit board comprises a width dimension WMA5 and a length dimension LMA5. In the length dimension, a separation of magnetometers 34 is defined by the distance S2. A offset in the length direction between magnetometers 34 on adjacent rows of the matrix is defined by dimension S5. In the width dimension, a separation of rows is defined by dimension S4.

Fig. 11f) illustrates a view of a magnetometer array showing more detail of the arrangement of magnetometers 32 relative to offset passive components 34.

In a specific example, a touchpad 30 can comprise a magnetometer array having dimensions 70 by 60 mm and comprising eight magnetometer sensors.

Fig. 12 schematically illustrates interaction volumes and surfaces around an electronic device. For example, the electronic device 10 is illustrated supported by an interaction surface 200. When signals received from a plurality of magnetometers MA1-MA5 are received by a device driver comprised a user environment of an operating system executed by the electronic device 10, applications hosted by the operating system of the electronic device 10 can access coordinates in two or three dimensions (for example, defined on support surface 200) representing the location of a user-borne device. A first sensing volume SV1 is provided in front of the first surface 14 of the electronic device 10 and is principally monitored by the first plurality of magnetometers MA1. A second sensing volume SV2 is provided to the left hand side of the second surface 16 and is principally monitored by the second plurality of magnetometers MA2. A third sensing volume SV3 is provided to the right hand side of the third surface 18 and is principally monitored by the third plurality of magnetometers MA3. A fourth sensing volume SV4 is provided to the rear of the electronic device 10 and is principally monitored by the fourth plurality of magnetometers SV4. A fifth sensing volume SV5 is provided above the touchpad 30 of the electronic device 10 and is principally monitored by the fifth plurality of magnetometers SV5.

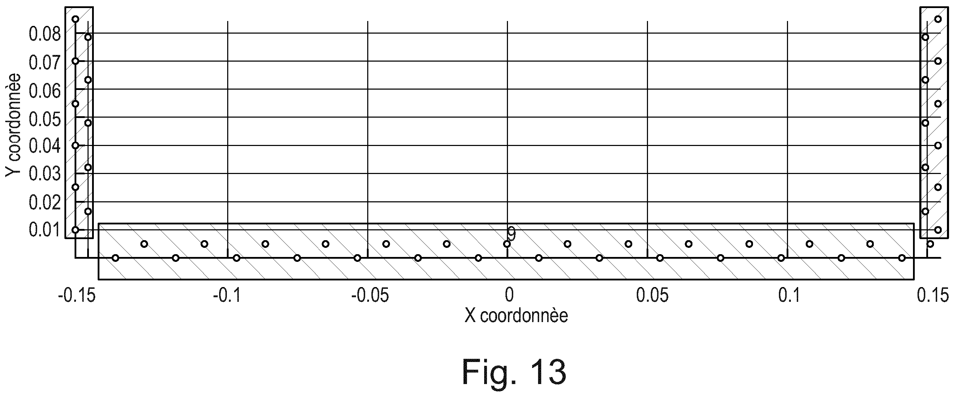

Fig. 13 schematically illustrates a specific example of three pluralities of magnetometers used to perform an experimental verification. In particular, the left printed circuit board (corresponding to plurality of magnetometers MA2) has a length of 10 mm and a width of 75 mm. The left printed circuit board comprises 11 magnetometers. A first line of six sensors is provided closest to the edge of the electronic device 10, and a second line of five sensors is provided offset towards the centroid of the electronic device 10. The left printed circuit board is mounted at an angle of 45° to the vertical. The right printed circuit board (corresponding to plurality of magnetometers MA3) is, in the experimental example of Fig. 13, identical to the left printed circuit board.

A front printed circuit board comprises a length dimension of 280 mm and a width dimension of 10 mm. It comprises 27 magnetometers in total. A first line of magnetometers proximate to the edge of the electronic device 10 comprises 14 magnetometers. A second line of magnetometers closer to the centroid of the electronic device 10 compared to the first line of magnetometers comprises 13 magnetometers.

According to an example, each magnetometer is separated from the centre of any other magnetometer by a distance of more than 10mm, 9mm, 8mm, 7mm, 5mm, 4mm, 3mm, 2mm, or 1mm.

According to an example, if a surface mount capacitor is required as a passive component for driving each magnetometer, the capacitor is spaced preferably more than 6 mm, and otherwise more than 8 mm from any other magnetometer.

According to an example, if a surface mount resistor is required as a passive component for driving each magnetometer, the resistor is placed preferably more than 6 mm, and otherwise more than 4 mm from any other magnetometer.

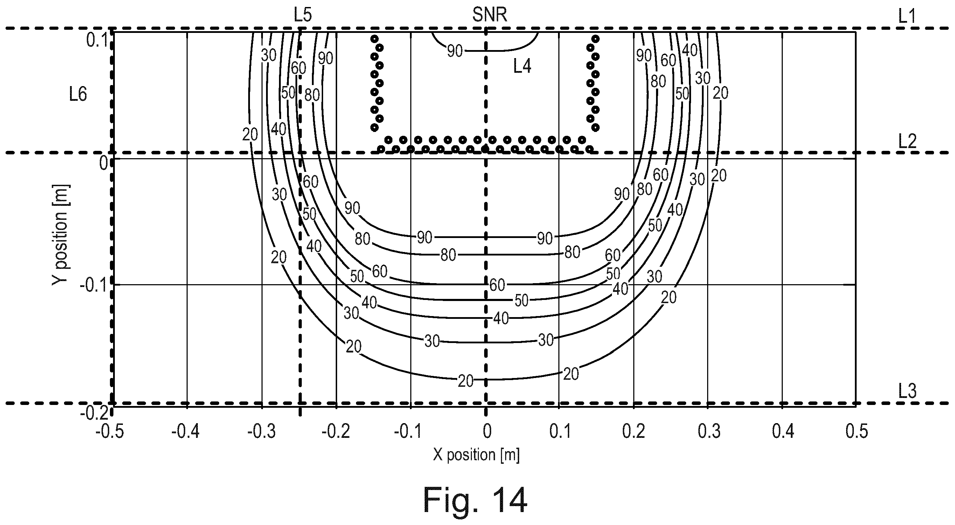

Fig. 14 schematically illustrates experimental results due to the layout illustrated in Fig. 13. The figure underside shows signal to noise contours (SNR lines) for the arrangement of magnetometers illustrated in Fig. 13. A proprietary Python code developed by the inventors is use to model the magnetic field. For the purposes of the simulation, the magnet used is a cylinder with a remanent field equal to 1,44, a diameter of 10 mm and a length of 10 mm. The SNR is computed at locations in this the XY plane and the Z position is fixed at 4 cm.

To measure the SNR, the magnet is moved along the grid. At each point the magnetic field is computed on the magnetometers and an average is computed, then the SNR is computed.

From the results, it can be seen that the presence of the magnetometer arrays on the left and right hand sides of electronic device extend the area of high signal-to-noise ratio at the left and right hand sides of the laptop in the simulation. This means that, for example, a mouse using a magnet with the sensor arrays will experience a better spatial resolution and/or low latency compared to a case where the magnetometer arrays at the left and/or right hand side of the laptop are not provided. Furthermore, the provision of a wide magnetometer array at the front of the laptop extends the useful distance at which a mouse comprising a magnet can be used in front of the laptop.

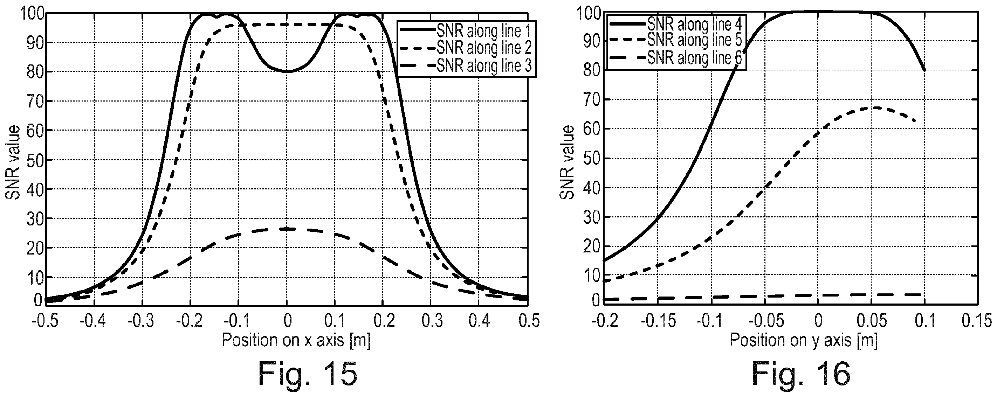

Fig. 15 schematically illustrates experimental results due to the layout illustrated in Fig. 13. For example, Fig. 15 illustrates the SNR along lines L1, L2, and L3 shown in Fig. 14.

Fig. 16 schematically illustrates experimental results due to the layout illustrated in Fig. 13. For example, Fig. 16 illustrates the SNR along lines L4, L5, and L6 shown in Fig. 14.

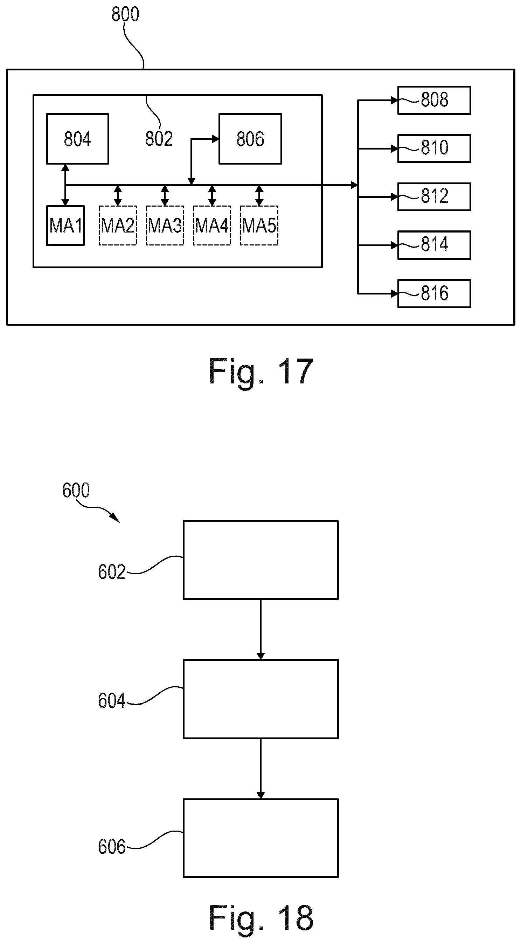

Fig. 17 schematically illustrates a configuration of an electronic device.

According to an example, each plurality of magnetometers MA1 comprises a processor for performing magnetic measurements. The magnetic measurements are transmitted to a processor to compute location information from the magnetic measurement.

According to a second aspect, there is provided a system 1 comprising an electronic device 10, 800 according to the first aspect or its embodiments. The system further comprises at least one user-borne device 100 comprising at least one magnetic object 110 and/or magnetic field generator. The electronic device 10 is configured to obtain magnetic field measurements associated with the user-borne device 100, to determine a location of the user-borne device relative to the reference coordinate system, and to communicate the location of the user-borne device 100.

According to an embodiment, the user-borne device 100 is one of a stylus, a ring, a dial, a keyboard, a joystick, a computer mouse, in examples comprising a scroll wheel, or a toy comprising a magnetic object.

According to a third aspect, there is provided a computer-implemented method comprising:
- obtaining 602, at an electronic device 10 according to the first aspect, or its embodiments, magnetic field measurements associated with at least one magnetic object and measured with a plurality of magnetometers comprised within the electronic device 10;
- determining 604 a location of the user-borne device relative to the reference coordinate system relative to the electronic device 10 based on the magnetic field measurements; and
- communicating 606 the location of the user-borne device 100 to a device driver instantiated in a user environment of the electronic device 10.

The computer-implemented method is schematically illustrated in Fig. 18.

According to an embodiment, the method further provides, based on the location of the user-borne device communicated to the device driver, moving a displayed cursor within a display 11 displayed by the electronic device 10.

According to an embodiment, the method further provides generating an input event based on the location of the user-borne device. In embodiments, the input event is a keyboard action, a dial movement, or a toy event.

According to an embodiment, the method further provides
- generating calibration coefficients corresponding to magnetometers in the plurality of magnetometers by:
   - positioning at least one known magnet in at least known position and orientation from the plurality of magnetometers, obtaining at least one set of corresponding magnetic field measurements using the magnetometers, and comparing the magnetic field measurements to a set of expected magnetic field measurements; and
   - applying the calibration coefficients to subsequently obtained magnetic field measurements associated with at least one magnetic object and measured with the plurality of magnetometers.

According to an embodiment, the calibration coefficients comprise position, orientation of sensor, sensitivity and offset.

According to a fourth aspect, there is provided a computer program element comprising machine readable instructions which, when executed by a processor, cause the processor to perform method steps according to the third aspect.

According to a fifth aspect, there is provided a computer readable medium comprising the computer program element of the fourth aspect.

### REFERENCE NUMERALS

- X: first (length) reference axis
- Y: second (width) reference axis
- Z: vertical (height) reference axis
- x_{d}: first device axis
- y_{d}: second device axis
- z_{d}: vertical device axis
- L: length of enclosure
- W: width of enclosure
- H: height of enclosure

- 1: System
- 8: User interaction surface
- 9: Hinge
- 9a: First volume
- 9b: Second volume
- 10: Electronic Device
- 11: Display
- 12: Enclosure
- 14: First surface of enclosure
- 14a: First portion
- 14b: First inner boundary plane
- 14c: First outer boundary plane
- 14d: First portion separation distance
- MA1 - MA5:: first to fifth plurality of Magnetometers
- MP2: Magnetometer plane of second plurality of magnetometers
- MP3: Magnetometer plane of third plurality of magnetometers
- 16: Second surface of enclosure
- 16a: Second portion
- 16b: Second inner boundary plane
- 16c: Second outer boundary plane
- 16d: Second portion separation distance
- 18: Third surface of the enclosure
- 18a: Third portion
- 18b: Third inner boundary plane
- 18c: Third outer boundary plane
- 18d: Third portion separation distance
- 20: Fourth surface of the enclosure
- 20a: Fourth portion
- 20b: Fourth inner boundary plane
- 20c: Fourth outer boundary plane
- 20d: Fourth portion separation distance

- 22a: Fifth portion
- 22b: Lower boundary of fifth portion
- 24: Lateral boundary of fifth portion
- 30: Touchpad
- 32: Individual Magnetometer
- 34: Passive components
- S0 - S5: magnetometer mounting pitch

- 100: user-borne device
- 110: at least one magnetic object
- 120: magnetic moment vector
- 130: contact surface or point
- 140: at least one interaction feature
- 150: housing
- 160: translation of magnetic object
- 170: first rotation
- 180: second rotation
- 200: interaction support
- 210: interaction surface
- 230: interaction support surface
- 300: plurality of magnetometers
- 310: magnetometer plane
- 320: magnetometer body
- 400: processing unit
- 500: one or more output devices
- 510: first output device
- 520: second output device
- 530: third output device
- 600: Method
- 602: Obtaining magnetic field measurements
- 604: Determining a location
- 606: Communicating a location

- 800: Electronic Device
- 802: Printed circuit board
- 804: Controller
- 806: Communication interface
- 808: Power supply
- 810: Processor
- 812: Memory
- 814: I/O Interfaces
- 816: Display circuitry

- U: user
- α₁: first rotation angle
- α₂: second rotation angle
- S_{k,l}: magnetometer
- δ₁, δ₂, δ₃: first set of inclination angles
- γ₁, γ₂, γ₃: second set of inclination angles
- β₁, β₂, β₃: third set of interaction surface inclination angles

## Claims

1. An electronic device (10, 800) configured to obtain user interactions from a user-borne device (100), wherein the user-borne device (100) comprises at least one magnetic object (110), wherein the electronic device (10, 800) comprises:
- an enclosure (12) comprising a plurality of surfaces (14, 16, 18, 20), wherein the enclosure (12) defines a mounting region of a plurality of components, wherein a spatial extent of the enclosure (12) is **characterised by** an orthogonal set of dimensions comprising a length (L), a width (W), and a height (H); and
- a first plurality of magnetometers (MA1) relative to a reference coordinate system of the enclosure (12), wherein the first plurality of magnetometers (MA1) is encompassed by the enclosure (12);
wherein the first plurality of magnetometers (MA1) is located within a first portion (14a) of the enclosure (12), wherein the location of the first portion (14a) is within a first outer boundary plane coterminous with a first surface (14) of the enclosure (12), and a first inner boundary plane (14b) parallel to the first outer boundary plane;
wherein the electronic device (10, 800) further comprises:
- a second plurality of magnetometers (MA2) relative to the reference coordinate system of the enclosure (12), wherein the second plurality of magnetometers (MA2) is encompassed by the enclosure (12); and
wherein the second plurality of magnetometers (MA2) is located within a second portion (16a) of the enclosure (12), wherein the location of the second portion is within a second outer boundary plane (16c) coterminous with the second surface of the enclosure (12), and a second inner boundary plane (16b) parallel to the second outer boundary plane (16c).

2. The electronic device (10, 800) according to claim 1,
wherein a line orthogonal to, and separating, the first surface (14) of the enclosure (12) and the first inner boundary plane (14b) defines a first portion separation distance (14d), and a ratio between the first portion separation (14d) distance and the width (W) of the enclosure (12) is less than one of: 0.25, 0.2, 0.15, 0.1, or 0.05.

3. The electronic device (10, 800) according to claim 2,
wherein the first portion separation distance (14d) is less than one of: 1mm, 2mm, 3mm, 4mm, 5mm, 10mm, 15mm, or 20mm.

4. The electronic device (10, 800) according to one of the preceding claims,
wherein the inside of the enclosure (12) is divided into a first volume (9a) comprising at least the first plurality of magnetometers (MA1), and a second volume (9b) that does not comprise any magnetometers.

5. The electronic device (10, 800) according to claim 4,
wherein the first volume (9a) does not comprise a substantial amount of magnetic material.

6. The electronic device (10, 800) according to one of the preceding claims,
wherein the first portion (14a) of the enclosure (12) has a length greater than one of 10%, 20%, 30%, 40%, 50%, 60%, 70%, 80%, 82.5%, 85%, 87.5%, or 90%, 92.5%, 95%, or 97.5% of the total length (L) of the enclosure (12).

7. The electronic device (10, 800) according to one of the preceding claims,
wherein the first plurality of magnetometers (MA1) comprises a network of N magnetometers arranged in a matrix, preferably wherein N is greater than or equal 5, 16, 32, 64, 128, or 256.

8. The electronic device (10, 800) according to one of claim 7,
wherein the magnetometers comprised in the matrix of the first plurality of magnetometers (MA1) are arranged in at least two rows separated by a separation distance (D) extending along a length direction (L(MA1)) of the first plurality of magnetometers (MA1), or alternatively the magnetometers comprised in the first plurality of magnetometers (MA1) are arranged in one row extending along a length direction (L(MA1)) of the first plurality of magnetometers (MA1).

9. The electronic device (10, 800) according to one of claims 1 to 8, further comprising:
- a third plurality of magnetometers (MA3) relative to the reference coordinate system of the enclosure (12), wherein the third plurality of magnetometers (MA3) is encompassed by the enclosure (12); and
wherein the third plurality of magnetometers (MA3) is located within a third portion of the enclosure (12), wherein the location of the third portion is within a third outer boundary plane (18c) coterminous with a third surface (18) of the enclosure (12), and a third inner boundary plane (18b) parallel to the third outer boundary plane (18c).

10. The electronic device (10, 800) according to one of claims 1 to 9, further comprising:
- a fourth plurality of magnetometers (MA4) relative to the reference coordinate system of the enclosure (12), wherein the fourth plurality of magnetometers (MA4) is encompassed by the enclosure (12); and
wherein the fourth plurality of magnetometers (MA4) is located within a fourth portion of the enclosure (12), wherein the location of the fourth portion is within a fourth outer boundary plane (20c) coterminous with a fourth surface (20) of the enclosure (12), and a fourth inner boundary plane (20b) parallel to the fourth outer boundary plane.

11. The electronic device (10, 800) according to one of the preceding claims,
wherein the electronic device (10, 800) is one of a laptop computer, a desktop computer, a tablet computer, a smartphone, a keyboard, a smartwatch, a television, an interactive whiteboard, a virtual reality headset, a wireless access point, and/or a display projector.

12. The electronic device (10, 800) according to one of the preceding claims, further comprising:
- a processor (804) communicably coupled to at least the first plurality of magnetometers; and
- a communication interface (806) communicably coupled to the processor (804);
wherein the processor (804) is configured to obtain, via the communications interface, a plurality of measurements associated with at least one magnetic object measured with at least the first plurality of magnetometers (MA1),
wherein the processor (804) is configured to perform signal processing on the plurality of signals to thus generate a coordinate characterising the location and/or an orientation of at least one user accessory comprising the at least one magnet, relative to at least the first magnetometer plane; and
wherein the processor (804) is configured to transmit the coordinate characterising the location and/or an orientation of at least one user accessory via the communication interface (806).

13. A system (1) comprising:
- an electronic device (10, 800) according to one of claims 1 to 12,
- at least one user-borne device (100) comprising at least one magnetic object (110) and/or magnetic field generator; and
wherein the electronic device (10) is configured to obtain magnetic field measurements associated with the user-borne device (100), to determine a location of the user-borne device relative to the reference coordinate system, and to communicate the location of the user-borne device (100).

14. A computer-implemented method (600) for determining location of a user-borne device, comprising:
- obtaining (602), at an electronic device (10) according to one of claims 1 to 13, magnetic field measurements associated with at least one magnetic object of the user-borne device and measured with a plurality of magnetometers comprised within the electronic device (10);
- determining (604) a location of the user-borne device relative to the reference coordinate system relative to the electronic device (10) based on the magnetic field measurements; and
- communicating (606) the location of the user-borne device (100) to a device driver instantiated in a user environment of the electronic device (10).

15. The computer-implemented method (600) according to claim 14, further comprising:
- based on the location of the user-borne communicated to the device driver, moving a displayed cursor within a display (11) displayed by the electronic device (10).

## Patentansprüche

1. Elektronikvorrichtung (10, 800), die konfiguriert ist, um Benutzerinteraktionen von einer benutzergetragenen Vorrichtung (100) zu erhalten, wobei die benutzergetragene Vorrichtung (100) mindestens ein magnetisches Objekt (110) umfasst, wobei die Elektronikvorrichtung (10, 800) umfasst:
- ein Gehäuse (12), umfassend eine Vielzahl von Oberflächen (14, 16, 18, 20), wobei das Gehäuse (12) einen Montagebereich einer Vielzahl von Komponenten definiert, wobei eine räumliche Ausdehnung des Gehäuses (12) **gekennzeichnet ist durch** einen orthogonalen Satz von Abmessungen, umfassend eine Länge (L), eine Breite (W) und eine Höhe (H); und
- eine erste Vielzahl von Magnetometern (MA1) relativ zu einem Referenzkoordinatensystem des Gehäuses (12), wobei die erste Vielzahl von Magnetometern (MA1) durch das Gehäuse (12) umschlossen ist;
wobei sich die erste Vielzahl von Magnetometern (MA1) innerhalb eines ersten Abschnitts (14a) des Gehäuses (12) befindet, wobei der Standort des ersten Abschnitts (14a) innerhalb einer ersten äußeren Begrenzungsebene, die mit einer ersten Oberfläche (14) des Gehäuses (12) zusammenfällt, und einer ersten inneren Begrenzungsebene (14b) parallel zu der ersten äußeren Begrenzungsebene liegt;
wobei die Elektronikvorrichtung (10, 800) ferner umfasst:
- eine zweite Vielzahl von Magnetometern (MA2) relativ zu dem Referenzkoordinatensystem des Gehäuses (12), wobei die zweite Vielzahl von Magnetometern (MA2) durch das Gehäuse (12) umschlossen ist; und
wobei sich die zweite Vielzahl von Magnetometern (MA2) innerhalb eines zweiten Abschnitts (16a) des Gehäuses (12) befindet, wobei der Standort des zweiten Abschnitts innerhalb einer zweiten äußeren Begrenzungsebene (16c), die mit der zweiten Oberfläche des Gehäuses (12) zusammenfällt, und einer zweiten inneren Begrenzungsebene (16b) parallel zu der zweiten äußeren Begrenzungsebene (16c) liegt.

2. Elektronikvorrichtung (10, 800) nach Anspruch 1,
wobei eine Linie, die orthogonal zu der ersten Oberfläche (14) des Gehäuses (12) und der ersten inneren Begrenzungsebene (14b) verläuft und sie trennt, einen Trennungsabstand (14d) des ersten Abschnitts definiert, und ein Verhältnis zwischen dem Trennungsabstand (14d) des ersten Abschnitts und der Breite (W) des Gehäuses (12) kleiner ist als eines von: 0,25, 0,2, 0,15, 0,1 oder 0,05.

3. Elektronikvorrichtung (10, 800) nach Anspruch 2,
wobei der Trennungsabstand (14d) des ersten Abschnitts kleiner ist als eines von: 1 mm, 2 mm, 3 mm, 4 mm, 5 mm, 10 mm, 15 mm oder 20 mm.

4. Elektronikvorrichtung (10, 800) nach einem der vorstehenden Ansprüche,
wobei das Innere des Gehäuses (12) in ein erstes Volumen (9a), umfassend mindestens die erste Vielzahl von Magnetometern (MA1), und ein zweites Volumen (9b), das keine Magnetometer umfasst, unterteilt ist.

5. Elektronikvorrichtung (10, 800) nach Anspruch 4,
wobei das erste Volumen (9a) keine wesentliche Menge magnetischen Materials umfasst.

6. Elektronikvorrichtung (10, 800) nach einem der vorstehenden Ansprüche,
wobei der erste Abschnitt (14a) des Gehäuses (12) eine Länge aufweist, die größer als 10 %, 20 %, 30 %, 40 %, 50 %, 60 %, 70 %, 80 %, 82,5 %, 85 %, 87,5 % oder 90 %, 92,5 %, 95 % oder 97,5 % der Gesamtlänge (L) des Gehäuses (12) ist.

7. Elektronikvorrichtung (10, 800) nach einem der vorstehenden Ansprüche,
wobei die erste Vielzahl von Magnetometern (MA1) ein Netzwerk aus N Magnetometern umfasst, die in einer Matrix angeordnet sind, wobei N vorzugsweise größer als oder gleich 5, 16, 32, 64, 128 oder 256 ist.

8. Elektronikvorrichtung (10, 800) nach einem von Anspruch 7,
wobei die Magnetometer, die in der Matrix der ersten Vielzahl von Magnetometern (MA1) umfasst sind, in mindestens zwei Reihen angeordnet sind, die durch einen Trennungsabstand (D) getrennt sind, der sich entlang einer Längenrichtung (L(MA1)) der ersten Vielzahl von Magnetometern (MA1) erstreckt, oder alternativ die Magnetometer, die in der ersten Vielzahl von Magnetometern (MA1) umfasst sind, in einer Reihe angeordnet sind, die sich entlang einer Längenrichtung (L(MA1)) der ersten Vielzahl von Magnetometern (MA1) erstreckt.

9. Elektronikvorrichtung (10, 800) nach einem der Ansprüche 1 bis 8, ferner umfassend:
- eine dritte Vielzahl von Magnetometern (MA3) relativ zu dem Referenzkoordinatensystem des Gehäuses (12), wobei die dritte Vielzahl von Magnetometern (MA3) durch das Gehäuse (12) umschlossen ist; und
wobei sich die dritte Vielzahl von Magnetometern (MA3) innerhalb eines dritten Abschnitts des Gehäuses (12) befindet, wobei der Standort des dritten Abschnitts innerhalb einer dritten äußeren Begrenzungsebene (18c), die mit einer dritten Oberfläche (18) des Gehäuses (12) zusammenfällt, und einer dritten inneren Begrenzungsebene (18b) parallel zu der dritten äußeren Begrenzungsebene (18c) liegt.

10. Elektronikvorrichtung (10, 800) nach einem der Ansprüche 1 bis 9, ferner umfassend:
- eine vierte Vielzahl von Magnetometern (MA4) relativ zu dem Referenzkoordinatensystem des Gehäuses (12), wobei die vierte Vielzahl von Magnetometern (MA4) durch das Gehäuse (12) umschlossen ist; und
wobei sich die vierte Vielzahl von Magnetometern (MA4) innerhalb eines vierten Abschnitts des Gehäuses (12) befindet, wobei der Standort des vierten Abschnitts innerhalb einer vierten äußeren Begrenzungsebene (20c), die mit einer vierten Oberfläche (20) des Gehäuses (12) zusammenfällt, und einer vierten inneren Begrenzungsebene (20b) parallel zu der vierten äußeren Begrenzungsebene liegt.

11. Elektronikvorrichtung (10, 800) nach einem der vorstehenden Ansprüche,
wobei die Elektronikvorrichtung (10, 800) eines von einem Laptop-Computer, einem Desktop-Computer, einem Tablet-Computer, einem Smartphone, einer Tastatur, einer Smartwatch, einem Fernseher, einem interaktiven Whiteboard, einem Virtual-Reality-Headset, einem drahtlosen Zugangspunkt und/oder einem Anzeigeprojektor ist.

12. Elektronikvorrichtung (10, 800) nach einem der vorstehenden Ansprüche, ferner umfassend:
- einen Prozessor (804), der mit mindestens der ersten Vielzahl von Magnetometern kommunikativ gekoppelt ist; und
- eine Kommunikationsschnittstelle (806), die mit dem Prozessor (804) kommunikativ gekoppelt ist;
wobei der Prozessor (804) konfiguriert ist, um über die Kommunikationsschnittstelle eine Vielzahl von Messungen zu erhalten, die mit mindestens einem magnetischen Objekt verknüpft sind, die mit mindestens der ersten Vielzahl von Magnetometern (MA1) gemessen werden,
wobei der Prozessor (804) konfiguriert ist, um eine Signalverarbeitung an der Vielzahl von Signalen durchzuführen, um so eine Koordinate zu erzeugen, die den Standort und/oder eine Ausrichtung mindestens eines Benutzerzubehörs, umfassend den mindestens einen Magneten, relativ zu mindestens der ersten Magnetometerebene kennzeichnet; und
wobei der Prozessor (804) konfiguriert ist, um die Koordinate, die den Standort und/oder die Ausrichtung mindestens eines Benutzerzubehörs über die Kommunikationsschnittstelle (806) zu übertragen.

13. System (1), umfassend:
- eine Elektronikvorrichtung (10, 800) nach einem der Ansprüche 1 bis 12,
- mindestens eine benutzergetragene Vorrichtung (100), umfassend mindestens ein magnetisches Objekt (110) und/oder einen Magnetfeldgenerator; und
wobei die Elektronikvorrichtung (10) konfiguriert ist, um Magnetfeldmessungen, die mit der benutzergetragenen Vorrichtung (100) verknüpft sind, durchzuführen, um einen Standort der benutzergetragenen Vorrichtung relativ zu dem Referenzkoordinatensystem zu bestimmen und um den Standort der benutzergetragenen Vorrichtung (100) zu kommunizieren.

14. Computerimplementiertes Verfahren (600) zum Bestimmen eines Standorts einer benutzergetragenen Vorrichtung, umfassend:
- Erhalten (602) von Magnetfeldmessungen an einer Elektronikvorrichtung (10) nach einem der Ansprüche 1 bis 13, die mit mindestens einem magnetischen Objekt der benutzergetragenen Vorrichtung verknüpft sind und mit einer Vielzahl von Magnetometern gemessen werden, die innerhalb der Elektronikvorrichtung (10) umfasst sind;
- Bestimmen (604) eines Standorts der benutzergetragenen Vorrichtung relativ zu dem Referenzkoordinatensystem relativ zu der Elektronikvorrichtung (10) basierend auf den Magnetfeldmessungen; und
- Kommunizieren (606) des Standorts der benutzergetragenen Vorrichtung (100) an einen Vorrichtungstreiber, der in einer Benutzerumgebung der Elektronikvorrichtung (10) instanziiert ist.

15. Computerimplementiertes Verfahren (600) nach Anspruch 14, ferner umfassend:
- basierend auf dem Standort der benutzergetragenen, die dem Vorrichtungstreiber kommuniziert wird, Bewegen eines angezeigten Cursors innerhalb einer Anzeige (11), die durch die Elektronikvorrichtung (10) angezeigt wird.

## Revendications

1. Dispositif électronique (10, 800) configuré pour obtenir des interactions utilisateur à partir d'un dispositif porté par l'utilisateur (100), dans lequel le dispositif porté par l'utilisateur (100) comprend au moins un objet magnétique (110), dans lequel le dispositif électronique (10, 800) comprend :
- une enceinte (12) comprenant une pluralité de surfaces (14, 16, 18, 20), dans lequel l'enceinte (12) définit une région de montage d'une pluralité de composants, dans lequel une étendue spatiale de l'enceinte (12) est **caractérisée par** un ensemble orthogonal de dimensions comprenant une longueur (L), une largeur (W), et une hauteur (H) ; et
- une première pluralité de magnétomètres (MA1) par rapport à un système de coordonnées de référence de l'enceinte (12), dans lequel la première pluralité de magnétomètres (MA1) est entourée par l'enceinte (12) ;
dans lequel la première pluralité de magnétomètres (MA1) est située dans une première partie (14a) de l'enceinte (12), dans lequel l'emplacement de la première partie (14a) est dans un premier plan de limite externe attenant à une première surface (14) de l'enceinte (12), et dans un premier plan de limite interne (14b) parallèle au premier plan de limite externe ;
dans lequel le dispositif électronique (10, 800) comprend en outre :
- une deuxième pluralité de magnétomètres (MA2) par rapport au système de coordonnées de référence de l'enceinte (12), dans lequel la deuxième pluralité de magnétomètres (MA2) est entourée par l'enceinte (12) ; et
dans lequel la deuxième pluralité de magnétomètres (MA2) est située dans une deuxième partie (16a) de l'enceinte (12), dans lequel l'emplacement de la deuxième partie est dans un deuxième plan de limite externe (16c) attenant à la deuxième surface de l'enceinte (12), et un deuxième plan de limite interne (16b) parallèle au deuxième plan de limite externe (16c).

2. Dispositif électronique (10, 800) selon la revendication 1,
dans lequel une ligne orthogonale à la première surface (14) de l'enceinte (12) et au premier plan de limite interne (14b), et séparant ceux-ci, définit une distance de séparation de première partie (14d), et un rapport entre la distance de séparation de première partie (14d) et la largeur (W) de l'enceinte (12) est inférieur à l'un parmi : 0,25, 0,2, 0,15, 0,1 ou 0,05.

3. Dispositif électronique (10, 800) selon la revendication 2,
dans lequel la distance de séparation de première partie (14d) est inférieure à l'une parmi : 1 mm, 2 mm, 3 mm, 4 mm, 5 mm, 10 mm, 15 mm ou 20 mm.

4. Dispositif électronique (10, 800) selon l'une des revendications précédentes,
dans lequel l'intérieur de l'enceinte (12) est divisé en un premier volume (9a) comprenant au moins la première pluralité de magnétomètres (MA1), et un second volume (9b) qui ne comprend aucun magnétomètre.

5. Dispositif électronique (10, 800) selon la revendication 4,
dans lequel le premier volume (9a) ne comprend pas une quantité importante de matériau magnétique.

6. Dispositif électronique (10, 800) selon l'une des revendications précédentes,
dans lequel la première partie (14a) de l'enceinte (12) a une longueur supérieure à l'une des valeurs parmi 10 %, 20 %, 30 %, 40 %, 50 %, 60 %, 70 %, 80 %, 82,5 %, 85 %, 87,5 % ou 90 %, 92,5 %, 95 % ou 97,5 % de la longueur totale (L) de l'enceinte (12).

7. Dispositif électronique (10, 800) selon l'une des revendications précédentes,
dans lequel la première pluralité de magnétomètres (MA1) comprend un réseau de N magnétomètres disposés dans une matrice, de préférence dans lequel N est supérieur ou égal à 5, 16, 32, 64, 128 ou 256.

8. Dispositif électronique (10, 800) selon la revendication 7,
dans lequel les magnétomètres compris dans la matrice de la première pluralité de magnétomètres (MA1) sont disposés en au moins deux rangées séparées par une distance de séparation (D) s'étendant le long d'une direction de longueur (L(MA1)) de la première pluralité de magnétomètres (MA1), ou alternativement les magnétomètres compris dans la première pluralité de magnétomètres (MA1) sont disposés en une rangée s'étendant le long d'une direction de longueur (L(MA1)) de la première pluralité de magnétomètres (MA1).

9. Dispositif électronique (10, 800) selon l'une des revendications 1 à 8, comprenant en outre :
- une troisième pluralité de magnétomètres (MA3) par rapport au système de coordonnées de référence de l'enceinte (12), dans lequel la troisième pluralité de magnétomètres (MA3) est entourée par l'enceinte (12) ; et
dans lequel la troisième pluralité de magnétomètres (MA3) est située dans une troisième partie de l'enceinte (12), dans lequel l'emplacement de la troisième partie est dans un troisième plan de limite externe (18c) attenant à une troisième surface (18) de l'enceinte (12), et un troisième plan de limite interne (18b) parallèle au troisième plan de limite externe (18c).

10. Dispositif électronique (10, 800) selon l'une des revendications 1 à 9, comprenant en outre :
- une quatrième pluralité de magnétomètres (MA4) par rapport au système de coordonnées de référence de l'enceinte (12), dans lequel la quatrième pluralité de magnétomètres (MA4) est entourée par l'enceinte (12) ; et
dans lequel la quatrième pluralité de magnétomètres (MA4) est située dans une quatrième partie de l'enceinte (12), dans lequel l'emplacement de la quatrième partie est dans un quatrième plan de limite externe (20c) attenant à une quatrième surface (20) de l'enceinte (12), et un quatrième plan de limite interne (20b) parallèle au quatrième plan de limite externe.

11. Dispositif électronique (10, 800) selon l'une des revendications précédentes,
dans lequel le dispositif électronique (10, 800) est l'un parmi un ordinateur portable, un ordinateur de bureau, une tablette, un téléphone intelligent, un clavier, une montre intelligente, une télévision, un tableau blanc interactif, un casque de réalité virtuelle, un point d'accès sans fil et/ou un projecteur d'affichage.

12. Dispositif électronique (10, 800) selon l'une des revendications précédentes, comprenant en outre :
- un processeur (804) couplé en communication à au moins la première pluralité de magnétomètres ; et
- une interface de communication (806) couplée en communication au processeur (804) ;
dans lequel le processeur (804) est configuré pour obtenir, par le biais de l'interface de communication, une pluralité de mesures associées à au moins un objet magnétique mesuré avec au moins la première pluralité de magnétomètres (MA1),
dans lequel le processeur (804) est configuré pour effectuer un traitement de signaux sur la pluralité de signaux pour générer ainsi une coordonnée caractérisant l'emplacement et/ou une orientation d'au moins un accessoire d'utilisateur comprenant l'au moins un aimant, par rapport à au moins le premier plan de magnétomètre ; et
dans lequel le processeur (804) est configuré pour transmettre la coordonnée caractérisant l'emplacement et/ou une orientation d'au moins un accessoire de l'utilisateur par le biais de l'interface de communication (806).

13. Système (1) comprenant :
- un dispositif électronique (10, 800) selon l'une des revendications 1 à 12,
- au moins un dispositif porté par l'utilisateur (100) comprenant au moins un objet magnétique (110) et/ou un générateur de champ magnétique ; et
dans lequel le dispositif électronique (10) est configuré pour obtenir des mesures de champ magnétique associées au dispositif porté par l'utilisateur (100), pour déterminer un emplacement du dispositif porté par l'utilisateur par rapport au système de coordonnées de référence, et pour communiquer l'emplacement du dispositif porté par l'utilisateur (100).

14. Procédé mis en œuvre par ordinateur (600) destiné à déterminer un emplacement d'un dispositif porté par l'utilisateur, comprenant :
- l'obtention (602), au niveau d'un dispositif électronique (10) selon l'une des revendications 1 à 13, de mesures de champ magnétique associées à au moins un objet magnétique du dispositif porté par l'utilisateur et mesurées avec une pluralité de magnétomètres compris dans le dispositif électronique (10) ;
- la détermination (604) d'un emplacement du dispositif porté par l'utilisateur par rapport au système de coordonnées de référence par rapport au dispositif électronique (10) en fonction des mesures du champ magnétique ; et
- la communication (606) de l'emplacement du dispositif porté par l'utilisateur (100) à un pilote de dispositif instancié dans un environnement utilisateur du dispositif électronique (10).

15. Procédé mis en œuvre par ordinateur (600) selon la revendication 14, comprenant en outre :
- en fonction de l'emplacement du porté par l'utilisateur communiqué au pilote de dispositif, le déplacement d'un curseur affiché à l'intérieur d'un écran (11) affiché par le dispositif électronique (10).
